# EUROPEAN PATENT SPECIFICATION

(11) **EP 0 775 015 B1**
(45) Date of publication and mention of the grant of the patent: **15.09.2004**
(21) Application number: 95925543.1
(22) Date of filing: 10.07.1995
(51) Int. Cl.: B01D 71/02, B01J 37/02

(54) **ZEOLITE LAYERS WITH CONTROLLED CRYSTAL WIDTH AND PREFERRED ORIENTATION GROWN ON A GROWTH ENHANCING LAYER**
ZEOLITH SCHICHTEN MIT EINER KONTROLLIERTEN KRISTALLBREITE UND EINEM WACHSTUM MIT BEVORZUGTER ORIENTIERUNG AUF EINER WACHSTUMSFÖRDERNDEN SCHICHT
COUCHES DE ZEOLITE A LARGEUR REGULEE DES CRISTAUX ET A ORIENTATION PREFEREE CULTIVEE SUR UNE COUCHE FAVORISANT LA CROISSANCE CRISTALLINE

(30) Priority: 08.07.1994 US 272361; 07.06.1995 US 477007; 07.07.1995 US 499720
(43) Date of publication of application: 28.05.1997
(73) Proprietor: ExxonMobil Research and Engineering Company, Annandale, New Jersey 08801 (US)
(72) Inventor: LAI, Wenyih, F., Fairlawn, NJ 07410 (US); DECKMAN, Harry, W., Clinton, NJ 08809 (US); McHENRY, James, A., Washington, NJ 07882 (US); VERDUIJN, Johannes, P., B-3061 Leefdaal (BE)
(74) Representative: White, Nicholas John, Dr.
(86) International application number: PCT/US1995/008514
(87) International publication number: WO 1996/001687

(56) References cited:
- WO-A-93/19840
- WO-A-94/01365
- WO-A-94/25151
- DE-A- 3 827 049
- US-A- 4 800 187

## Description

### Field of the Invention

The present invention is directed toward a new composition of matter comprising a zeolite layer, a growth enhancing layer, and a support.

### Background of the Invention

Zeolite membranes have long been a goal of separation science. For a zeolite membrane to be practical, it must have a high flux as well as selectivity. Obtaining such a membrane has been difficult in the past because of defects in the zeolite film. This has been especially true for membranes grown from low alkaline synthesis routes described in the literature. These membranes have a heterogeneous crystal structure in the membrane and require an enormous (>50 micrometer) layer thickness to seal pinholes and void structures. What is needed in the art is a thin zeolite membrane with very few defects.

A patent describing the direct synthesis of zeolite membranes has been issued to W. Haag and J. G. Tsikoyiannis of Mobil (U.S. Patent 5,110,478. issued May 5, 1992). A paper describing scientific results obtained with this type of membrane was published in an article titled "Synthesis and Characterization of a Pure Zeolitic Membrane" by J. G. Tsikoyiannis and W. Haag in Zeolites (Vol. 12, p. 126,1992). The membrane described in the above article and patent is used as a freestanding membrane and is not affixed or attached as a layer to a microporous support making it mechanically fragile and leading to ready breakage during use. The physical structure of the membrane is such that there is a gradient of crystal sizes across the thickness of the membrane. This gradient of crystal sizes throughout the layer thickness precludes growth of a thin membrane with a minimum number of non-selective permeation paths.

Zeolites have also been grown on supports. See, for example, "High temperature stainless steel supported zeolite (MFI) membranes: preparation, module construction and permeation experiments," E. R. Geus, H. van Bekkum, W. Bakker and

Zeolites have also been grown on supports. See, for example, "High temperature stainless steel supported zeolite (MFI) membranes: preparation, module construction and permeation experiments," E. R Geus, H. van Bekkum, W. Bakker and J. Moulijin, Microporous Materials, Vol. 1, p. 137, 1993; Netherlands patent application 9011048, European patent application 91309239.1 and U.S. patent 4,099,692.

All of the above prepared membranes are formed with several zones (larger crystals grown on top of smaller crystals) across the membrane thickness. In several zones, the crystals are not grown into a dense mat that is free of intercrystalline voids. To obtain a permselective zeolite membrane, the above zeolite layers (comprised of zones) must be grown to an excessive thickness (>50 microns) to seal off voids and defects within the membrane. This creates a great mass transfer resistance causing reduced flux. Obtaining functional zeolite membranes from high alkaline synthesis routes is difficult because the heterogenous crystals in the membrane require an enormous membrane thickness to seal pinholes and void structures which lowers the membrane selectivity. The presence of such pinholes and voids is the cause of optical scattering in as synthesized high alkaline membranes.

### Brief Description of the Drawings

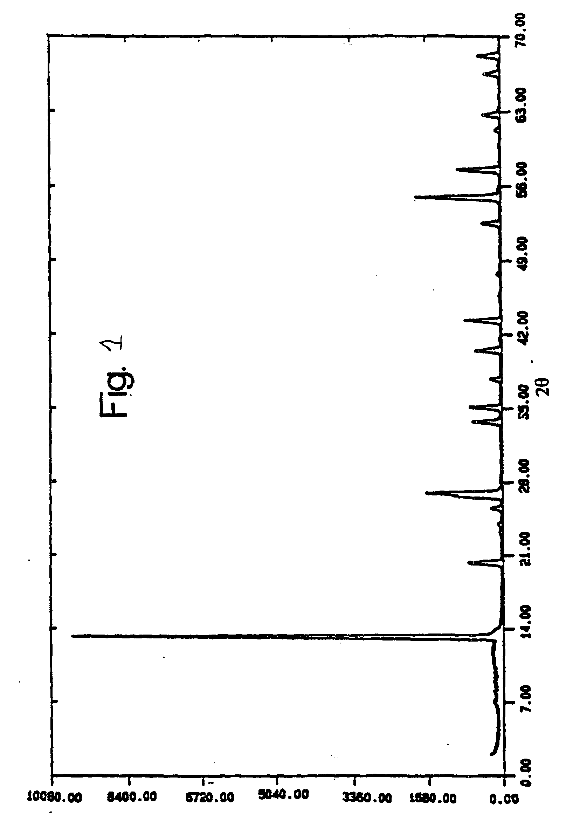

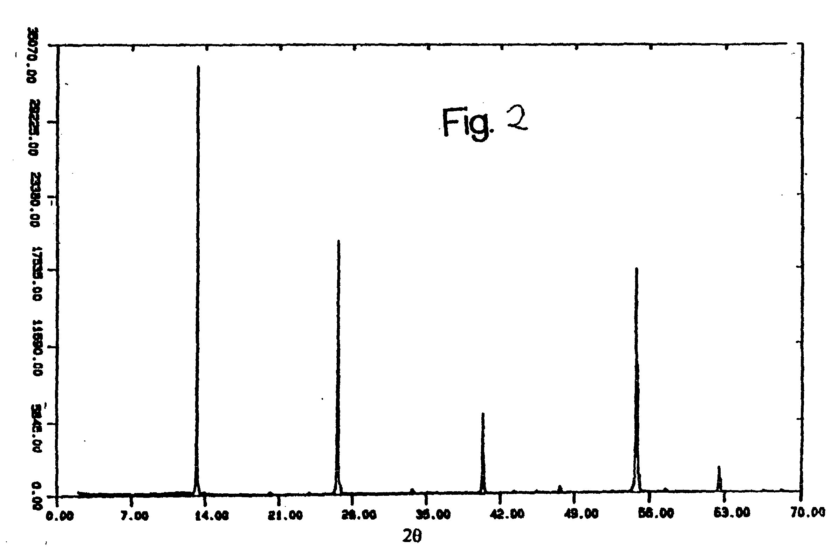

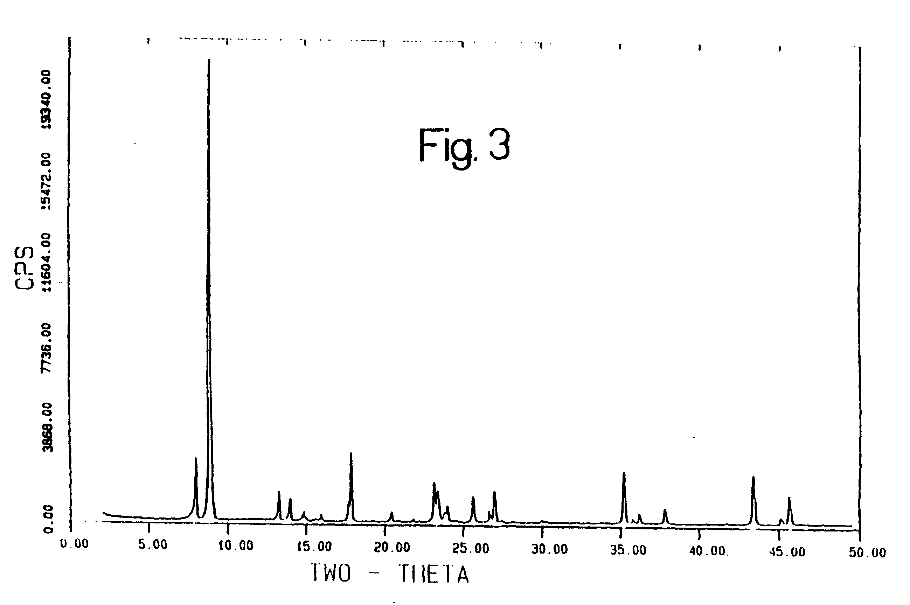

Figures 1, 2, and 3 show the x-ray diffraction patterns of compositions comprising a porous support having coated thereon a growth enhancing layer, and a zeolite layer grown on the growth enhancing layer, wherein the growth enhancing layer was inverted, as described herein, during growth of the zeolite layer. The x-axis are 2 theta and the y-axis are intensity in CPS. Figures 1 and 2 show compositions having C-axis crystallographic preferred orientations of different degrees. Figure 3 shows a composition having b-axis orientation.

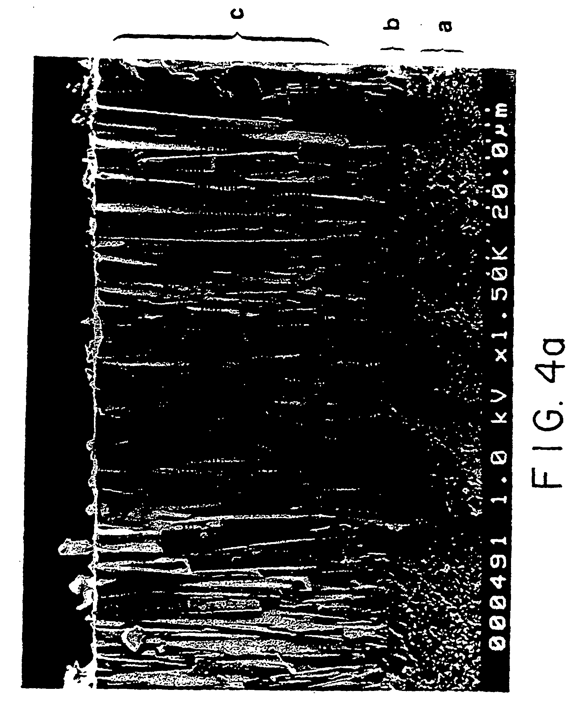

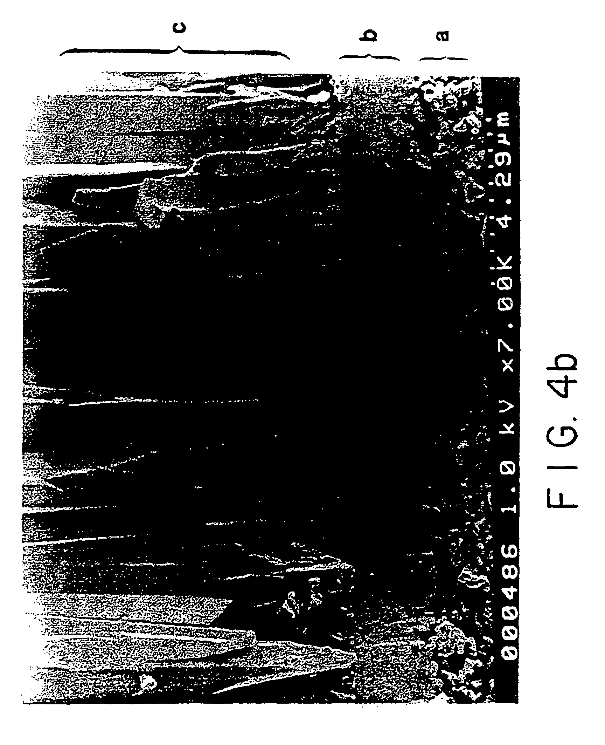

Figure 4 shows a scanning electron micrograph of the morphology of a MFI zeolite layer, a Growth Enhancing Layer, and a porous substrate in accordance with the instant invention which was fractured to reveal a cross section. The layer labeled (A) is the porous substrate formed of α-alumina with 80 nm. pores. The layer labeled (B) is the GEL layer which is mesoporous and clearly discernible in the micrograph. The layer labeled (C) contains MFI zeolite crystals which are intergrown together in a dense mat. The columnar nature of the zeolite crystals used is readily apparent from the morphology of the fracture surface through the zeolite layer. The layer (C) is substantially free of voids and defects.

Figure 4(b) shows a scanning electron micrograph of the same composition as Figure 4(a) only at higher magnification in which more detail about the interfaces between layers (A), (B) and (C) can be seen.

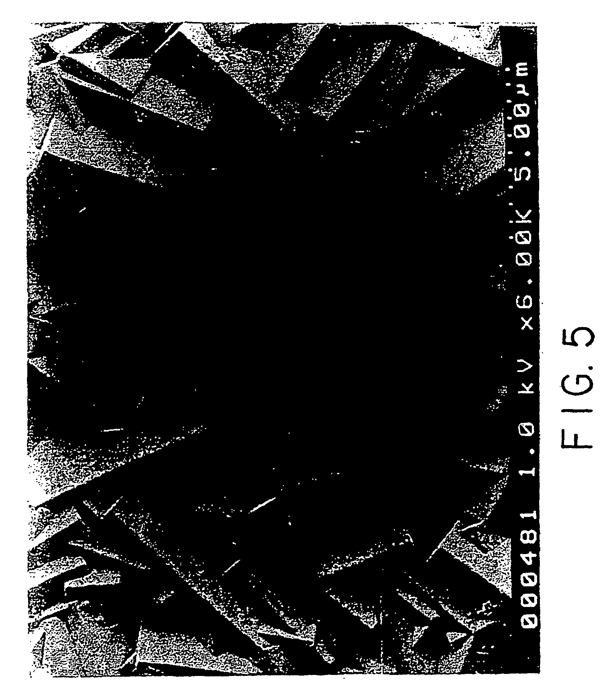

Figure 5 shows a scanning electron micrograph of the exterior surface of a membrane of the instant invention. The surface shown is an intergrown dense mat of zeolite crystals which are substantially free of defects extending through the thickness of the layer.

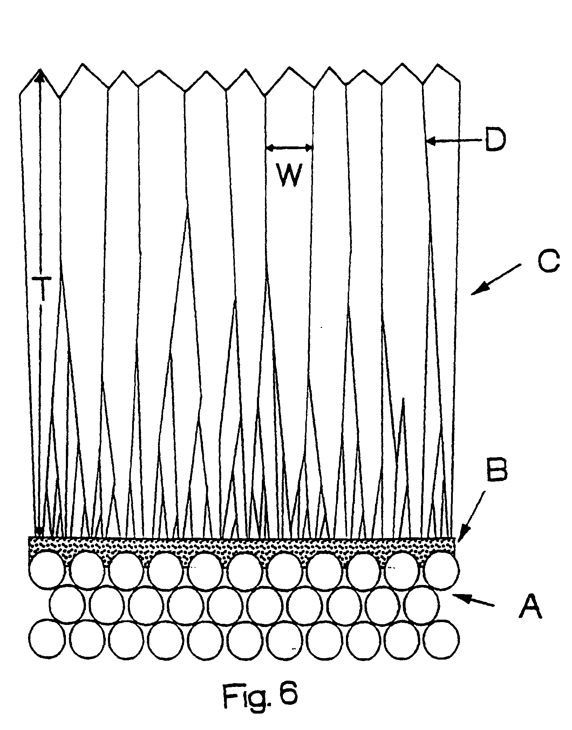

Figure 6 is a schematic view of the cross-sectional morphology, described herein, of one of the instant compositions. (A) is the porous substrate, (B) the growth enhancing layer, (C) a zeolite layer, (D) a grain boundary, (T) the thickness of one zeolite crystal, and (W) the width of a zeolite crystal at one point on the crystal.

### Summary of the Invention

One aspect of the present invention is directed toward a zeolite membrane which exhibits a columnar cross-sectional morphology and preferred crystallographic orientation comprising a substrate having coated thereon a calcined mesoporous growth enhancing layer and a layer of columnar zeolite crystals on said mesoporous growth enhancing layer, and wherein said mesoporous growth enhancing layer comprises zeolites, zeolite and polymeric metal oxide zeolites and colloidal sized metals; or zeolite, colloidal sized metal and polymeric metal oxide; and wherein said zeolites are selected from the group consisting of nanocrystalline zeolites and colloidal sized zeolites, and wherein said substrate is selected from the group consisting of porous and non-porous substrates and wherein said mesoporous growth enhancing layer has interstices of about 2 to about 200 nm, and wherein said columnar zeolite layer is a polycrystalline layer wherein 99% of said columnar zeolite crystals have at least one point between adjacent crystals that is ≤ 2 nm. In a further aspect the present invention is directed toward a composition comprising a substrate having coated thereon a calcined mesoporous growth enhancing layer and a layer of zeolite crystals in the form of a polycrystalline dense matt on said mesoporous growth enhancing layer, and wherein said mesoporous growth enhancing layer comprises zeolites; zeolite and colloidal or polymeric metal oxide; zeolite and colloidal sized metals; zeolite, colloidal sized metal and colloidal or polymeric metal oxide; and mixtures thereof, and wherein said zeolites of said mesoporous growth enhancing layer are selected from the group consisting of nanocrystalline zeolites and colloidal sized zeolites, and wherein said mesoporous growth enhancing layer has interstices of about 2 to about 200 nm, said zeolite layer is a polycrystalline layer which exhibits a shape preferred orientation and is substantially free of defects extending through the thickness of the layer and in which 99% of said zeolite crystals have at least one point between adjacent crystals that is ≤ 2 nm.

The invention is further directed to a process of producing a zeolite membrane according to claim 1 or a composition according to claim 2 containing composition comprising:
(a) coating a substrate with a growth enhancing layer wherein said growth enhancing layer is prepared by utilizing a solution comprising zeolite; zeolite and metal oxide; zeolite and colloidal metal; or zeolite, colloidal metal, and metal oxide; and wherein said zeolite is selected from the group consisting of nanocrystalline and colloidal zeolite and wherein said metal oxide is colloidal metal oxide or polymeric metal oxide prepared by sol-gel processing, followed by calcination at a temperature of about 200 to about 1000°C for at least about 2 hours;
(b) contacting said substrate having said growth enhancing layer coated thereon with a zeolite synthesis mixture;
(c) hydrothermally treating said substrate and zeolite synthesis mixture for a time and a temperature sufficient to form a zeolite layer on said growth enhancing layer, and wherein settling of particles produced from said zeolite synthesis mixture onto said zeolite layer is prevented;
(d) removing unreacted zeolite synthesis mixture.

Contacting as used herein includes total and partial immersion. The solution of step (a) will contain a solvent, preferably water (distilled, deionized, demineralized) etc.

The process further comprises step (e) calcining said composition when said zeolite synthesis mixture contains an organic template for a time and at a temperature sufficient to remove said organic template.

The compositions of the instant invention (which can be referred to as zeolite membranes), have a large number of applications in separations. For example, they may be used in separation of CO₂ from methane, water alcohol separations, hydrogen recovery, xylenes separation, and several other molecular separations. The compositions are also useful in catalysizing reactions. The compositions are often referred to in the art as zeolite membranes and can be used as such. The instant compositions prepared on non-porous supports are useful as sensors.

### Detailed Description of the Invention

The present invention describes a new type of supported zeolite composition formed on the surface of a growth enhancing layer (GEL) that contains nanocrystalline or colloidal sized zeolites, mixtures of colloidal sized or nanocrystalline zeolites and metal oxides, mixtures of colloidal sized or nanocrystalline zeolite and colloidal sized metal and mixtures of colloidal sized or nanocrystalline zeolite, colloidal sized metal and metal oxide. Hence, the growth enhancing layer and the zeolite layer grown on it contain zeolite, but each is a distinct layer. The morphology of the zeolite layer is such that there are substantially no voids extending through the thickness of the layer because the crystals of similar habit are oriented and are grown into a polycrystalline dense mat. Dense mat as used herein means that at least 99%, preferably 99.9% of the zeolite crystals have at least one point between adjacent crystals that is ≤ 2 nm. In the instant invention, the spacing between crystals is set by a grain boundary zone and the maximum grain boundary zone spacing, absent voids or defects, will be ≤ 4 nm and such spacings are readily observable by transmission electron microscopy and may contain inorganic oxide material. As used herein, a grain boundary zone is defined as the width of the disordered zone between two adjacent ordered crystals. Preferably, the zeolite layer will exhibit, in cross-section, an assembly of oriented crystals of similar habit, preferably a columnar cross-sectional morphology (see Figure 4, views (a) and (b)) formed by crystallographically oriented zeolite crystals. Other habits are possible depending on the particular zeolite type and the composition of the zeolite synthesis mixture.

The dense mat of zeolite crystals is intergrown in the composition so that non-selective permeation paths through the membrane are blocked by the narrowest point of approach between crystals. Non-selective permeation pathways are permeation pathways which exist at room temperature that do not pass through the zeolite crystals. This blockage of nonpermeation pathways exists at room temperature after a template which occludes the pore structure is removed from the zeolite crystals. Templates which are used to grow the zeolite are often removed by a calcination step. From transmission electron microscopy (TEM) investigations, the narrowest point of approach between crystals of less than 2 nm after the template is removed, can be established. The space between crystals at this point can contain inorganic oxide material that restricts non-selective permeation of molecules through the membrane. The absence of non-selective permeation paths can be detected by the ability to prevent the permeation at room temperature (~20°C) of dye molecules through the composition after any template is removed from the pore structure. Dye molecules which can be chosen to detect non-selective permeation pathways through the membrane should have minimum dimensions which are larger than the controlling aperture through the zeolite and the size of the dye molecule should also be less than 2 nm. Non-selective pathways transport dye molecules which are larger than the pore size of the zeolite. The dye molecules should be carried in a solution made with a solvent which can be transported through the zeolite pore structure and the zeolite layer should not be allowed to pick up foreign contaminants (such as water) before being tested. It is found that the compositions made in accordance with the present invention block the permeation of dye molecules at room temperature through the zeolite layer. All of the dye molecules chosen have at least one dimension less than approximately 2 nm. The lack of permeation at room temperature of dye molecules with sizes less than approximately 2 nm. demonstrates that non-selective permeation pathways with sizes less than approximately 2 nm are blocked. It should be noted that this test does not have to be performed with a dye molecule and any molecular species that can be detected having a size less than 2 nm and greater than the zeolite pore dimension can be used. The advantage of using a dye molecule is that it can be readily detected by optical means.

The zeolite layer is grown on top of a mesoporous growth enhancing layer (GEL) layer which contains colloidal sized or nanocrystalline zeolites. The growth enhancing layer smooths the porous support, facilitates the growth of zeolite layer and provides a seeding surface allowing control of the nucleation density of zeolite crystals formed on the support. This growth enhancing layer has to be chemically and mechanically stable in hydrothermal synthesis conditions and the colloidal sized or nanocrystalline zeolites contained in it serve as nucleation sites for growth of the zeolite layer. Altering the density of nucleation sites alters the way the zeolite layer grows which determines zeolite crystal size, packing (i.e., voids and defects), and crystal habit or external crystal morphology.

The GEL layer contains identifiable particles with interstices between said particles of zeolites; zeolites and metal oxides; zeolite and colloidal sized metal and zeolite, colloidal sized metal, and metal oxide. Said interstices are mesoporous and have sizes of about 2 to about 200 nm. preferably from about 4 to about 20 nm. Mesoporous as used herein means that there is a connected void structure throughout the GEL layer. Interstices in this size range provide a permeation path for molecules through the GEL layer. Molecules can permeate through these interstices because they are devoid of any material which would hinder mass transport during membrane use. Applicants believe that the size and shape of the zeolite crystals in the zeolite layer is controlled by properties of the mesoporous growth enhancing layer (GEL). Controlling the morphology, orientation and shape of the zeolite crystals in the zeolite layer reduces the number of voids between crystals because the crystals pack together such that only grain boundary zones separate them (see Figures 4(a), 4 (b) and 6): The GEL layer is believed to nucleate the formation of the dense mat of zeolite crystals grown on the surface of the GEL layer. This dense mat of crystals is closely packed together such that there exists at least one point between adjacent crystals of ≤ 2 nm. As the zeolite layer grows from the interface at the GEL layer, crystal width may increase, however the individual crystals remain separated at their boundary zones by at least one point of spacing of ≤ 2 nm. This densely packed mat is the zeolite layer. Zeolite layers grown without the use of the growth enhancing layer do not have the degree of perfection of the layers described herein. The zeolite layers of the instant composition can be formed of crystals of a variety of habits (such as, e.g., columns or plates, as can be determined by SEM) or crystallographic preferred orientation (as can be determined by XRD), depending on the chosen zeolite, the synthesis mixture, reaction conditions and the composition of the GEL.

Void as used herein means spaces between adjacent zeolite crystals in the zeolite layer larger than 4 nm. The instant compositions are virtually free of voids in the zeolite layer. Voids are at most about 1 volume %, preferably less than 0.1 volume % of the zeolite layer. Voids can be detected from cross-sectional images of the zeolite layer made in the scanning or transmission electron microscope. Defects are connected voids and are spaces between adjacent zeolite crystals extending through the thickness of the zeolite layer. In the instant composition, the total number of defects in the zeolite layer with sizes > 4 nm is < 10,000 per square inch), preferably < 100 per square inch. The number of defects larger than about 200 nm is less than 10 per square inch, preferably less than 1 per square inch.

Isolated defects of the type described can be detected in dye permeation experiments. Isolated points at which dye permeates into the substrate reveal such defects. Defects can also be determined by examining cross-sections of the zeolites compositions in the scanning electron microscope. A cross-sectional view showing a zeolite composition which does not have any defects in the region examined is shown in Figure 4. Gas permeation can also be used to reveal defects in the composition. If the permeability of the zeolite layer to nitrogen at room temperature is less than 5x10⁻⁶ moles/(m²-sec-Pascal) for each micrometer of thickness of the zeolite layer, the composition be considered to have an acceptable defect density. More preferably, the permeability of the zeolite layer to nitrogen at room temperature is less than 5x10⁻⁷ moles/(m²-sec-Pascal) for each micrometer of thickness of the zeolite layer.

The new architecture of the instant invention is composed of a substrate, a growth enhancing layer containing mesoporous interstices, and a layer of zeolite crystals. The substrate on which the GEL layer is grown will be selected from porous and nonporous substrates. When a porous material is desired, it may be porous throughout its entire thickness. Preferably an inorganic oxide will be utilized. The porous substrate, hence can be a ceramic, metal, zeolite, carbide, polymer or a mixture thereof. For example, alumina, titania, cordierite, mullite, stainless steel, pyrex, silica, silicon carbide, carbon graphite and silicon nitride or mixture thereof can be utilized. Preferably, a porous ceramic or porous metal, more preferably, stainless steel, alumina, and cordierite will be used. The porous substrate, hence may have a uniform pore size throughout or may be asymmetrical, having a larger pore structure throughout the bulk of the substrate with a smaller pore structure at the surface on which the GEL layer is to be grown. The substrate pore size is dictated amongst other things by mass transfer considerations. It is preferred that the pore structure and thickness of the substrate be chosen such that the mass transfer resistance does not limit the flux of material permeating through the zeolite membrane during use. The porous substrate will hence display a porosity of about 5 to about 70%, preferably about 20 to about 50% and an average pore size of about 0.004 to about 2000 µm, preferably about 0.05 to about 50 micrometers. It is preferred that the surface of the porous surface on which the GEL layer is deposited be smooth. Roughness in the substrate leads to defects in the zeolite layer. The substrate should have an average roughness with an amplitude of less than 10 µm with an aspect ratio of the roughness less than 1:1. It is preferable that the average roughness of the substrate be less 0.5 µm with an aspect ratio of the roughness less than 1:1. One function of the GEL is to smooth the support. If a nonporous substrate is utilized, it may be selected from, e.g. quartz, silicon, glass, borosilicate glasses, dense ceramics, for example, clay, metals, polymers, graphite and mixtures thereof. When nonporous supports are utilized, the finished product can be used as a sensor or as a catalyst.

The mesoporous growth enhancing layer is formed from a solution containing a nanocrystalline or colloidal zeolite or a mixture of metal oxide and nanocrystalline or colloidal zeolite or a mixture of nanocrystalline or colloidal zeolite and colloidal metal. Preferably, nanocrystalline or colloidal zeolite or a mixture of nanocrystalline or colloidal zeolite and metal oxide will be used to form the GEL layer. The metal oxides from which the GEL layer is prepared are colloidal metal oxides or polymeric metal oxides prepared from sol-gel processing. Nanocrystalline zeolites are crystallites having sizes from about 1 nm to 1 µm. Nanocrystalline zeolites can, eg, be prepared in accordance with the methods set forth in PCT-EP92-02386 herein incorporated by reference, or other methods known to those stalled in the art. Colloidal sized particles are between 5 and 10,00 nm and form a stable dispersion or solution of discrete particles. Preferably, the colloidal particles will be 25 to 5,00 nm, most preferably less than 100 nm. Colloidal zeolites with sizes < 500 nm are readily obtainable. The solution for preparing the GEL layer is coated onto the surface of the porous substrate and calcined at temperatures ≤ 1000°C, preferably from about 200 to about 1000°C, most preferably 300-600°C. Following calcination, a stable mesoporous growth enhancing layer is formed and is maintained in the final composition as a distinct layer having a thickness of about 0.1 to 20 microns, preferably about 1 to 5 microns. This layer contains interstices as described above. Following calcination the zeolite will be nanocrystalline or colloidal sized zeolite and the metal and metal oxide will be colloidal sized metal and metal oxide. The GEL layer can be formed from silica, silicates, aluminosilicates, aluminophosphates, silicoalumino-phosphates, metalloaluminophosphates, metalloaluminophosphosilicates, and stano-silicates. Representative of molecular sieves (zeolites) which can be used include but are not limited to those of structure type AFI, AEL, BEA, EUO, FER, KFI, MAZ, MOR, MEL, MTW, OFF, TON, FAU (includes zeolite X and zeolite Y), zeolite beta, LTA, LTL, AFS, AFY, APC, APD, MTN, MTT, AEL, CHA aud MFI zeolites. Preferably, an MFI zeolite with a silicon to aluminum ratio greater than 30 will be used including compositions with no aluminum. MFI zeolites with Si/Al ratios greater than 300 are herein referred to as silicalite.

Some of the above materials, while not being true zeolites are frequently referred to in the literature as such, and the term zeolite will herein be used broadly to include such materials.

The metal oxides which can be used herein are selected from the group consisting of colloidal alumina, colloidal silica, colloidal zirconia, colloidal titania and polymeric metal oxides prepared from sol-gel processing and mixtures thereof. Preferably colloidal alumina will be used. The colloidal metals which can be used include copper, platinum and silver.

By adjusting the ratio of colloidal zeolite and metal oxide, the density of nucleation sites on the GEL can be controlled. This density controls the morphology of the zeolite film grown over the growth enhancing layer in a subsequent hydrothermal synthesis step. The higher the nucleation density, the narrower the zeolite crystal width the crystals wilt exhibit at the GEL zeolite layer interface. Nucleation density can be controlled by the relative proportions of colloidal zeolites and metal oxides (with the density decreasing as the amount of the metal oxide utilized increases) as welt as the size of the colloidal zeolites in the GEL. Colloidal sized zeolites in the range of from 5-1000 nm are thus used in the GEL. larger colloidal crystals utilized in the GEL, the wider the zeolite crystals in the layer will be. Applicants believe that the addition of metal oxide, colloidal metal or mixtures thereof to the colloidal zeolite in the GEL layer provides spaces between nucleation sites allowing for control of the crystal width in the zeolite layer.

GELs containing pure metal oxides or colloidal metal fail to produce the necessary nucleation sites. The formulation of GEL is 100-x wt% of colloidal metal or metal oxide: x wt% of colloidal zeolite, where x is at least 0.01 when the GEL is not formed from pure colloidal zeolite. Hence, the nucleation density is set by the above formula as well as the size of the particles of colloidal zeolite, colloidal metal and metal oxide. The smaller the particle size of the colloidal zeolite particles, the denser the nucleation sites which produces narrower zeolite crystals.

The preferred synthesis technique used with this invention is the growth of zeolite crystals on the face of a GEL layer which is oriented from 90 to 270 degrees in a low alkaline synthesis mixture. In the 180 degree orientation, the preferred orientation, the GEL layer is horizontal and facing downward, thus being referred to as inverted. Applicants believe this prevents zeolites which are homogeneously nucleated in the synthesis mixture from settling by gravitation and incorporating into the growing zeolite layer. Thus, the zeolite layer is not perturbed during the growth process. We refer to this synthesis technique as a Growth Enhancing Layer-Low Alkaline Inverted Insitu Synthesis Crystallization (GEL-LAI-ISC) process. The herein grown MFI zeolite compositions are optically transparent through the zeolite layer thickness in that within this layer they do not scatter light.

The MFI zeolite compositions also show a significant crystallographic preferred orientation (as determined by XRD). Preferred orientation will be different depending on the zeolite chosen for the zeolite layer and the method of preparation. However, a preferred orientation will always be exhibited. The crystallographic orientation of the MFI crystals in the preferred embodiment is such that at least 75% of the crystals in the zeolite layer are aligned in an orientation with the c-axis parallel to the growth direction (within 15° preferably 5° of the normal to the surface of the zeolite layer), preferably at least 90% of the crystals will display the preferred orientation. The crystal width in the zeolite layer can vary from 0.1 to 20 µm.

A measurement of the proportion of the crystals that have one direction normal to the zeolite layer (such as the c-axis) may be obtained by comparison of the x-ray diffraction pattern of the layer with that of a randomly oriented zeolite powder. In the case of an MFI zeolite with a preferred c-axis orientation, for example, the ratio of the intensity of the 002-peak to the combined 200 and 020 peak is divided by the same ratio for randomly oriented powder; the quotient is termed the degree of crystallographic preferred orientation (CPO - the orientation of which needs to be specified). Measured in this way, the zeolite layers of the instant invention have a degree of CPO along the c-axis of at least 2, and may have a degree of CPO along the c-axis as high as 10⁸.

In preparing the GEL coated substrate onto which the zeolite layer is to be grown, the substrate is first coated with the GEL followed by in-situ crystallization. The GEL smooths the porous substrate, facilitates the growth of the zeolite layer and provides a seeding surface to increase the nucleation density of the zeolite crystals formed on the GEL. The GEL must be chemically and mechanically stable under the hydrothermal conditions employed during the preparation of the final composition and also capable of enhancing heterogenous nucleation or surface nucleation. Altering the density of nucleation sites changes the zeolite crystal habit by adjusting the width of the crystals formed.

The GEL layer is produced from prepared solutions by a variety of solution coating techniques known in the art. For example, dip coating, spin coating, and slip casting, can be used. The coated substrate is then calcined at temperatures ranging from about 200°C to about 1000°C to form a stable mesoporous matrix. The preferred coating method is determined from the geometry of the substrate. In practical situations, a spin coating method can be used for disks or plates. Spin coating gives excellent control of the coating thickness. For tubular and honeycomb type substrates, a dipping process can be used. The GEL will be from about 0.1 to about 20 µm thick. The calcination time will be sufficient to form a mechanically stable layer thus at least about 30 minutes, preferably 2 hours, more preferably at least about 6 hours. Calcination of the GEL will typically be conducted with a heating rate of about 10 to 20°C/hour from room temperature to the calcination temperature. This is easily determined in the art. Preferably a dilute solution of a concentration of 0.1-10 wt% solids, more preferably 1 wt% solids will be used to produce the GEL.

The GEL coating solution may contain small amounts of organic binders such as PEG (polyethylene glycol), PVA (polyvinyl alcohol) or methyl cellulose. Once the substrate having the GEL coating is prepared, the zeolite layer is then grown.

The hydrothermal treatment to form the crystalline zeolite upper layer is carried out by contacting the substrate carrying the intermediate layer with a zeolite synthesis mixture, and hydrothermally treating for a time and at the temperature sufficient to effect crystallization, e.g., in an autoclave under autogenous pressure. Heating times may be, for example, in the range of from 30 minutes to about 300 hours. Temperatures may be, for example, from 50°C to about 300°C and preferably about 180°C.

Growth of the zeolite layer on the GEL coated substrate is carried out with the GEL layer in an orientation and location in the synthesis mixture such that the settling of particles produced during hydrothermal treatment onto the GEL layer, is minimized or prevented. For example, the GEL layer is advantageously at least 5 mm, and preferably at lest 8 mm, from a wall or, especially the base, of the vessel to avoid interference from particle settling. Alternatively, additional means to inhibit settling can be employed in the zeolite synthesis process.

The zeolite layer can have either a shape preferred orientation, a crystallographically preferred orientation, or both. Shape or crystallographically preferred orientations occur because of the control of the relative rates of nucleation and growth offered by the synthesis procedure. Specifically, during synthesis, the rate of growth can be made to dominate the rate of surface nucleation of new crystals or incorporation of new crystals. Incorporation of new crystals is defined as attachment onto the surface of the growing layer of a crystal formed in the synthesis mixture. Since the growth rate can dominate renucleation or incorporation, crystals can competitively grow for long periods of time without significant addition of new crystals into the growing layer. Since the growing layer is composed of individual crystals and the synthesis method seeks to prevent renucleation or incorporation of crystals, the resulting composition can have shape, crystallographically preferred orientation, or both. Shape orientation occurs because the crystals are forced to grow with preferred regular habits (or morphology) at the surface of the zeolite layer. A regular habit (or morphology) is taken to be a regularly shaped outline of a particular crystallographic grain in the layer. Regularly shaped outlines are defined as those which can be fitted or packed together so that there are no interconnected spaces or voids between crystals. Interconnected voids will form a pore structure. A few examples of regular habits with regular shapes are columnar, cubic, rectangular, and prismatic. Spherical, irregular and elliptical shapes are not considered to be regular habits. In a shape preferred orientational, defined layers will have the same regular habit. This can be measured by cleaving or fracturing the substrate on which the layer is grown and examining the cross-sectional morphology of the zeolite layer with a scanning electron microscope. Examining the surface of the as grown zeolite layer can also give additional information concerning the shape preferred orientation in the layer. A layer with shape preferred orientation is taken to be one which has more than 90% of the crystals within one layer inside the zeolite layer exhibiting self similar regular habits. The self similar requirement means that the same regular habit is exhibited within a layer that can be drawn in the electron micrograph of the cross-section of the zeolite layer, however even though the shapes are the same, they do not all have to be the same size. Because of the growth mechanism of the zeolite layer, it is possible to have one shape preferred orientation at the bottom (base) of the layer and another shape preferred orientation in a layer drawn near the surface of the layer. An example of this is an MFI zeolite layer which has a columnar habit at the base of the layer and a rectangular habit at the surface of the layer. Many MFI zeolite layers grown in accordance with the present invention exhibit only one habit throughout the thickness of the zeolite layer. Usually MFI zeolite layers with a preferred C-axis orientation exhibit a columnar habit (or morphology) throughout the entire thickness of the zeolite layer. Often shape preferred orientational layers have a preferred crystallographic orientation.

In the preferred embodiment, the zeolite layer is grown by suspending a substrate having the growth enhancing layer coated thereon in a zeolite synthesis mixture with the substrate oriented such that said growth enhancing layer is oriented from 90 to 270° in said synthesis mixture and wherein in said 180° orientation said growth enhancing layer is horizontal and facing downward, and wherein said growth enhancing layer is at least about 5mm from the bottom, at the lowest point, of said zeolite synthesis mixture, hydrothermally treating said substrate containing zeolite synthesis mixture for a time and at a temperature sufficient to form the zeolite layer. For example, at about 50 to about 300°C, preferably about 100 to about 250°C for at least about 30 minutes to form a zeolite layer on said growth enhancing layer. Washing said GEL and zeolite coated substrate with water for a time and at a temperature sufficient to remove any unreacted zeolite synthesis mixture, preferably at a temperature of about 15 to about 100°C for at least about 10 minutes, more preferably for at least about six hours. When the zeolite synthesis mixture contains an organic template, the composition, following washing, is calcined at a temperature of about 400 to about 600°C for at least about one hour. Longer calcination times will not affect membrane performance.
The zeolite layer grown in accordance with the instant invention will have a thickness of about 0.1-100µ, preferably about 0.5 to 20 micrometers. Thickness is herein defined as the distance from the GEL zeolite layer interface to the uppermost point on the zeolite crystal.
The zeolite layers of the instant invention are prepared from zeolite synthesis mixtures. Such mixtures are any mixtures from which zeolite crystals are grown and are well known in the art (see e.g., Handbook of Molecular Sieves, Rosemarie Szostak, Van Nostrand Reinhold, NY 1992, Zeolite Molecular Sieves, D.W. Breck; R.E. Kreiger Publishing Co., Malaba, Florida, 1984 ISBN 0-89874-648-5.). The zeolites which can be utilized include those utilizable in the GEL layer. A preferred route for MFI zeolites is from a low alkaline synthesis mixture having a pH of about 8 to about 12 preferably about 9.5 to about 11, and from which MFI zeolite crystals can be grown. Such mixtures are readily prepared by those skilled in the art. For example, suitable mixtures include Na₂O, TPABr (tetrapropylammoniumbromide), SiO₂ and water. The membranes are grown by suspending the GEL coated porous substrate of choice in the low alkaline synthesis mixture. The synthesis mixture is then heated to about 50 to about 300°C, preferably about 180°C for a period of about 30 minutes, preferably from about 30 minutes to about 300 hours. The zeolite layer of the instant invention will preferably be that grown on the 90 to 270° oriented growth enhancing layer. Any growth on the substrate not on the GEL layer, can be easily removed by known techniques such as scraping or grinding, and is not part of this invention.

Once the zeolite layer has been grown, any remaining synthesis mixture is removed, e.g., by washing with water at a temperature of about 15 to 100°C, preferably about 80 to about 100°C for at least about 10 minutes, preferably for at least six hours. Excess washing for longer periods will not affect the compositions separation capabilities.

Once the zeolite synthesis mixture is removed, if it contained an organic template, the composition is calcined to remove the template. For example, calcination in air or oxygen at about 400 to 600°C can be used for at least about one hour. Longer calcination times will not affect the performance of the membrane. If no organic template is present, a drying step may optionally be conducted at temperatures of about 100°C.

Catalytic functions can be incorporated into the compositions by methods known in the art. When a catalytic function is incorporated, the composition can be used as an active element in a reactor. Several different reactor architectures can be constructed depending on the location of the catalystic site in the composition. In one case the catalytic function can be located within the zeolite layer, while in another case the catalytic function can be located within the support or GEL layer, and in another case the catalytic function can be distributed throughout the support, GEL layer and the zeolite layer. In addition, catalytic function can be incorporated into a reactor by locating conventional catalyst particles near one or more surfaces of the composition such that specific products or reactants are continuously and selectively removed or added to the reaction zone throughout the reactor. Impregnating with catalytically active metals such as Group VIII noble metals and particularly platinum, can impart the catalytic function to the composition. The catalytic activity can be incorporated by techniques known to those skilled in the art such as the incipient wetness technique. The amount of Group VIII noble metal to be incorporated will range from 0.1 to about 10 wt%.

The compositions are useful for separation processes whereby feedstock derived from petroleum, natural gas, hydrocarbons, or air comprising at least two molecular species is contacted with the composition of the invention, wherein at least one molecular species of said feedstock is separated from said feedstock by said composition and wherein said hydrocarbon feedstocks are coal, bitumen and kerogen derived feedstocks. Separations which may be carried out using a composition in accordance with the invention include, for example, separation of normal alkanes from co-boiling hydrocarbons, especially n-C₁₀ to C₁₆ alkanes from kerosene, normal alkanes and alkenes from the corresponding branched alkane and alkene isomers; separation of aromatic compounds from one another, especially separation of C₈ aromatic isomers from each other, more especially paraxylene from a mixture of xylenes and, optionally, ethylbenzene, and separation of aromatics of different carbon numbers, for example, mixtures of benzene, toluene, and mixed C₈ aromatics; separation of aromatic compounds from aliphatic compounds, especially aromatic molecules with from 6 to 8 carbon atoms from C₅ to C₁₀ (naphtha range) aliphatics; separation of olefinic compounds from saturated compounds, especially light alkenes from alkane/alkene mixtures, more especially ethene from ethane and propene from propane; removing hydrogen from hydrogen-containing streams, especially from light refinery and petrochemical gas streams, more especially from C₂ and lighter components; and alcohols from aqueous streams. Also alcohols from other hydrocarbons, particularly alkanes and alkenes that may be present in mixtures formed during the manufacture of alcohols.

Specifically, the following table shows some possible feedstocks derived from petroleum, natural gas, hydrocarbons, or air and the molecular species separated therefrom by use of the instant compositions. The table is not meant to be limiting.

| Feedstock | Separated Molecular Species |
|---|---|
| Mixed xylenes (ortho, para, meta) and ethylbenzene | Paraxylene |
| Mixture of hydrogen, H₂S, and ammonia | Hydrogen |
| Mixture of normal and isobutanes | Normal butane |
| Mixture of normal and isobutenes | Normal butene |
| Kerosene containing C₉ to C₁₈ normal paraffins | C₉ to C₁₈ normal paraffins |
| Mixture of nitrogen and oxygen | Nitrogen (or oxygen) |
| Mixture of hydrogen and methane | Hydrogen |
| Mixture of hydrogen, ethane, and ethylene | Hydrogen and/or ethylene |
| H₂, propane and propylene | Hydrogen and /or propylene |
| Coker naphtha containing C₅ to C₁₀ normal olefins and paraffins | C₅ to C₁₀ normal olefins and paraffins |
| Methane and ethane mixtures containing argon, helium, neon, or nitrogen | Helium, neon, and/or argon |
| Intermediate reactor catalytic reformer products containing hydrogen and/or light gases | Hydrogen, and/or light gases (C₁-C₇) |
| Fluid Catalytic Cracking products containing H₂ and/or light gases | Hydrogen, and/or light gases |
| Naphtha containing C₅ to C₁₀ normal paraffins | C₅ to C₁₀ normal paraffins |
| Light coker gas oil containing C₉ to C ₁₈ normal olefins and paraffins | C₉ to C₁₈ normal olefins and paraffins |
| Mixture of normal and isopentanes | Normal pentane |
| Mixture of normal and isopentenes | Normal pentene |
| Mixture of ammonia, hydrogen, and nitrogen | Hydrogen and nitrogen |
| Mixture of A10 (10 carbon) aromatics | e.g. Paradiethylbenzene (PDEB) |
| Mixed butenes | n-Butenes |
| Sulfur and/or nitrogen compounds | H₂S and/or NH₃ |
| Mixtures containing Benzene (Toluene) | Benzene |

Applicants believe that molecular diffusion is responsible for the above separations. Additionally, the compositions can be used to effect a chemical reaction to yield at least one reaction product by contacting the feedstocks as described above or below with the compositions having a catalyst incorporated within the zeolite layer, support, or intermediate layer or by placing the catalyst in close enough proximity with the composition to form a module. A module would react the feedstock just prior to its entrance into the composition or just after its exit from the composition. In this manner one can separate at least one reaction product or reactant from the feedstocks. The catalysts of choice for particular process fluids are well known to those skilled in the art and are readily incorporated into the instant compositions or formed into modules by one skilled in the art. The following table represents some of the possible feedstocks/processes, in addition to those above which can be reacted and some possible products yielded. The table is not meant to be limiting.

| Feedstock/process | Product Yielded |
|---|---|
| Mixed xylenes (para, ortho, meta) and ethylbenzene | Paraxylene and/or ethylbenzene |
| Ethane dehydrogenation to ethylene | Hydrogen and/or Ethylene |
| Ethylbenzene dehydrogenation to styrene | Hydrogen |
| Butanes dehydrogenation butenes (iso's and normals) | Hydrogen |
| Propane dehydrogenation to propylene | Hydrogen and/or Propylene |
| C₁₀-C₁₈ normal paraffin dehydrogenation to olefins | Hydrogen |
| Hydrogen Sulfide decomposition | Hydrogen |
| Reforming dehydrogenation/aromatization | Hydrogen, light hydrocarbons (C₁-C₇) |
| Light Petroleum Gas dehydrogenation/aromatization | Hydrogen |
| Mixed Butenes | n-butenes |
| Hydrocarbon streams containing sulfur and/or nitrogen compounds (hydrotreating/hydroprocessing) | H₂S and or NH₃ with or without H₂ |

The zeolite layer of the invention may be employed as a membrane in such separations without the problem of being damaged by contact with the materials to be separated. Furthermore, many of these separations are carried out at elevated temperatures, as high as 500°C, and it is an advantage of the supported zeolite layer of the present invention that it may be used at such elevated temperatures.

The present invention accordingly also provides a process for the separation of a fluid mixture which comprises contacting the mixture with one face of a zeolite layer according to the invention under conditions such that at least one component of the mixture has a different steady state permeability through the layer from that of another component and recovering a component or mixture of components from the other face of the layer.

The invention further provides a process for catalyzing a chemical reaction which comprises contacting a feedstock with a zeolite layer according to the invention which is in active catalytic form under catalytic conversion conditions and recovering a composition comprising at least one conversion product.

The invention further provides a process for catalyzing a chemical reaction which comprises contacting a feedstock with one face of a zeolite layer according to the invention, that is in active catalytic form, under catalytic conversion conditions, and recovering from an opposite face of the layer at least one conversion product, advantageously in a concentration differing from its equilibrium concentration in the reaction mixture. For example, a p-xylene rich mixture from the reactor or reactor product in a xylenes isomerization process; aromatic compounds from aliphatics and hydrogen in a reforming reactor; hydrogen removal from refinery and chemicals processes such as alkane dehydrogenation in the formation of alkenes, light alkane/alkene dehydrocyclization in the formation of aromatics (e.g., Cyclar), ethylbenzene dehydrogenation to styrene.

The invention further provides a process for catalyzing a chemical reaction which comprises contacting one reactant of a bimolecular reaction with one face of a zeolite layer according to the invention, that is in active catalytic form, under catalytic conversion conditions, and controlling the addition of a second reactant by diffusion from the opposite face of the layer in order to more precisely control reaction conditions. Examples include: controlling ethylene, propylene or hydrogen addition to benzene in the formation of ethyl benzene, cumene or cyclohexane respectively.

The invention further contemplates separation of a feedstock as described herein wherein the separated species reacts as it leaves the composition or as it passes through the composition and thus forms another product. This is believed to increase the driving force for diffusion through the membrane layer.

Some specific reaction systems where these compositions would be advantageous for selective separation either in the reactor or on reactor effluent include: selective removal of a Para-Xylene rich mixture from the reactor, reactor product, reactor feed or other locations in a Xylenes isomerization process; selective separation of aromatics fractions or specific aromatics molecule rich streams from catalytic reforming or other aromatics generation processes such as light alkane and alkene dehydrocyclization processes (e.g., C₃-C₇ paraffins to aromatics from processes such as Cyclar), methanol to gasoline and catalytic cracking processes; selective separation of benzene rich fractions from refinery and chemical plant streams and processes; selective separation of olefins or specific olefin fractions from refinery and chemicals processing units including catalytic and thermal cracking, olefins isomerization processes, methanol to olefins processes, naphtha to olefins conversion processes, alkane dehydrogenation processes such as propane dehydrogenation to propylene; selective removal of hydrogen from refinery and chemicals streams and processes such as catalytic reforming, alkane dehydrogenation, catalytic cracking, thermal cracking, light alkane/alkene dehydrocyclization, ethylbenzene dehydrogenation, paraffin dehydrogenation; selective separation of molecular isomers in processes such as butane isomerization, paraffin isomerization, olefin isomerization, selective separation of alcohols from aqueous streams and/or other hydrocarbons.

The following examples are for illustration and are not meant to be limiting.

### EXAMPLES

### Materials

The following reagents were used in preparing GEL coatings: colloidal alumina solution, colloidal titania prepared from a sol-gel process, colloidal silicalite solutions, and distilled water. Several batches of colloidal silicalite solutions prepared in accordance with PCT-EP92-02386 were used for the preparation of GEL coatings. More information on these solutions are shown below:

| Batch No. | Silicalite (MFI) Synthesis Temp. °C | Silicalite (MFI) Washed | Solution pH | Silicalite (MFI) Solids (%) | Particle Size (nm) |
|---|---|---|---|---|---|
| 1 | 68 | yes | 10.3 | 8.7 | ~50 |
| 2 | 50 | no | >13 | ~9 | ~50 |
| 3 | 81 | yes | 9.9 | 9.1 | ~90 |
| 4 | 50 | no | >13 | ~9 | ~60 |
| 5 | 50 | yes | ~10 | ~9 | ~60 |

### Remarks:

1. All suspensions were prepared from the same type of synthesis solutions with the same raw materials.
2. Batch 4 was a duplication of 2. The solids content of batches 2 and 4 were calculated assuming 55% conversion of amorphous silica to zeolite. The actual solids content of these 2 unwashed samples is of course higher, e.g. for 4 the solids content (evaporation to dryness) was 23.3 wt%, but this includes zeolite, amorphous silica and residual TPAOH-NaOH.

Porous alumina and stainless steel substrates were used for the support of GEL and zeolite coatings. The average pore size and porosity of the alumina is about 80 nm and 32%, respectively. Porous sintered stainless steel substrates from Mott's (0.25 µm) and Pall's (M020, 2 µm) were obtained. All the substrates were cleaned with acetone in an ultra-sonic bath, dried at 120°C and then cooled down to room temperature before use.

### GEL Coating

In general, a dilute solution is preferred to produce a high quality growth enhancing layer. Dilution with distilled water to obtain a solids concentration less than 1 wt% is generally preferred. Colloidal silicalites and metal oxides are first diluted separately with distilled water to the concentration of 0.5 wt%. The diluted colloidal silicalite solution was slowly added into the desired amount of metal oxide solution with continuous stirring. The resulting solutions with the desired wt% of colloidal silicalite and metal oxide were then degased for 15 minutes to remove the trapped air in solutions.

The substrates were then spin coated with these solutions at 4000 rpm and calcined at 400 - 500°C for 6 hours in air. The heating rate was controlled at 20°C/hr.

### Hydrothermal Reaction

The hydrothermal experiments were performed using mixtures of the following reagents: NaOH (Baker), Al(NO3)3.9H2O (Baker), Ludox AS-40 (Dupont), NalCoag 115,2326 tetrapropylammonium bromide (98%, Aldrich), and distilled water.

MFI membranes were prepared from two different reaction batch mixtures, one containing silica only to make high silica MFI and the other with added alumina to make ZSM-5. They have the general formulation xM₂O:10 SiO₂:z Al₂O₃:p TPABr:yH₂O M can be Na, Li, K, Rb, and Cs, x was varied from 0 to 5, and y varied from 50 to 30,000, z varies from 0 to 0.5, and p varies from 0.2 to 1. All the results shown in the next section have the composition of 0.22 Na₂O: 10 SiO₂:O Al₂O₃:280 H₂O:0.5 TPABr with the exception of the ZSM-5 sample which contained 0.05 Al₂O₃ for ZSM-5 sample. The 1.74 g of TPABr and 0.45 g of NaOH (50 wt%) were dissolved in 52 ml of distilled water with stirring. To this solution, 18.8 g of Ludox AS-40 was then added with agitation for at least 15 minutes until a uniform solution was formed. TPABr may be replaced with tetrapropyl ammonium hydroxide if desired.

Substrates with GEL coating were placed inverted (180° orientation) in a Teflon lined autoclave by supporting them on the stainless steel wire frame. The distance between the substrate and the bottom of the autoclave was at least 5 mm. The synthesis solution was then poured into the autoclave to cover the whole substrate. The autoclave was sealed and placed in an oven, which was preheated at the desired temperature. The autoclaves were removed from the oven after reaction and cooled to room temperature. The coated substrates were washed with hot water for at least 6 hours, then calcined at 500°C for 6 hours in air. The heating rate was controlled at 10°C/hour.

### Analysis

The resulting membranes were characterized by x-ray diffraction, electron microscopy, dye test and permeability measurements.

### Results and Discussion

### Products

The following table shows some typical examples synthesized under different experimental conditions, such as GEL composition, reaction time, and substrate.

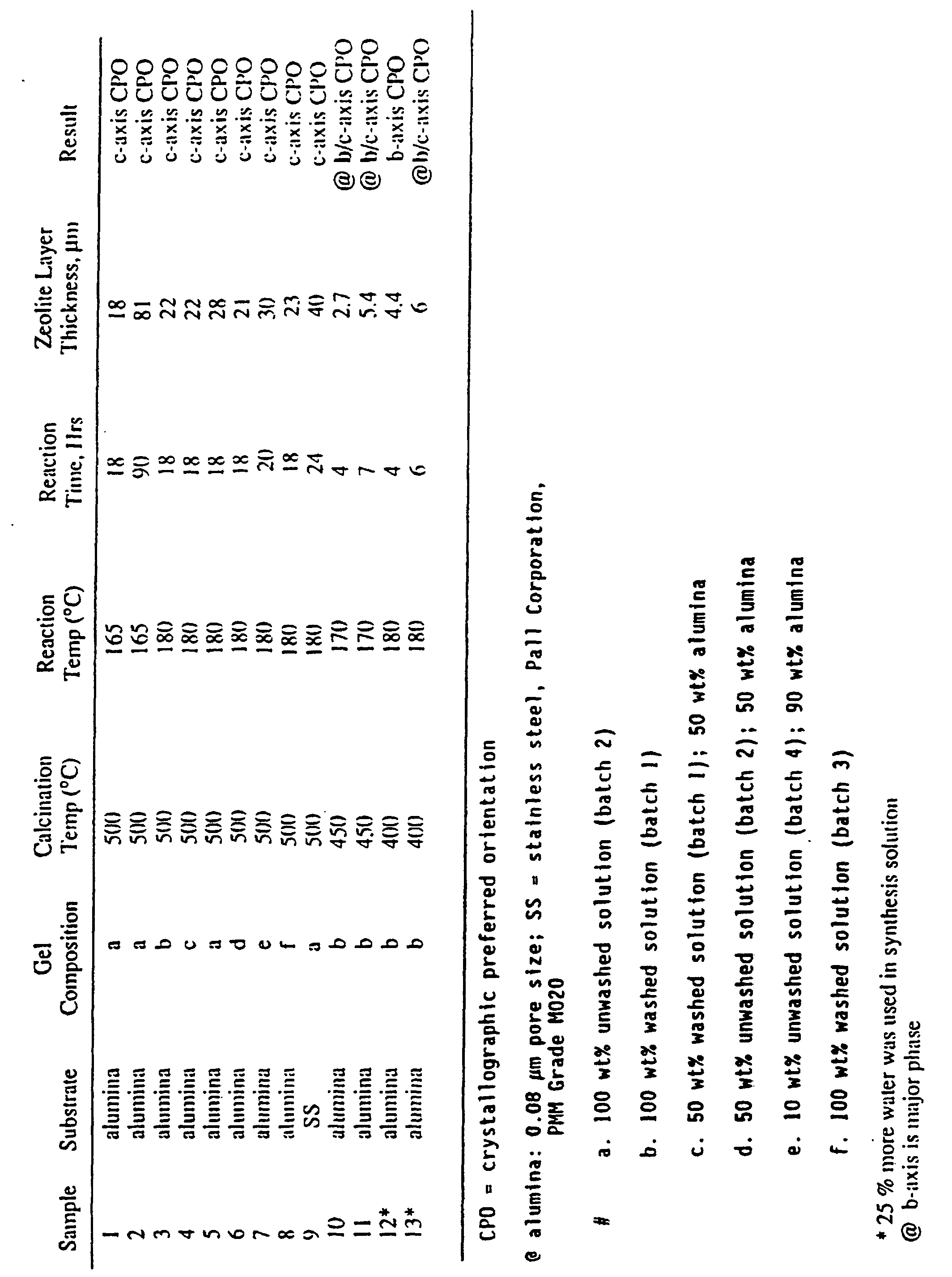

### General Observations

The x-ray diffraction pattern inverted zeolite membrane grown on a GEL coated substrate (LAI-GEL-ISC) were observed. Reflections of MFI type zeolite were identified in all diagrams. No second zeolite phase was observed. The only lines in the patterns not associated with the zeolite identified with the porous support. The pattern associated with the GEL-LAI-ISC membrane was dramatically different from that of MFI powder. It is seen (see Figures 1 and 2) that the MFI crystal layer prepared from GEL-LAI-ISC exhibits pronounced 00 l peaks with no other significant zeolite peaks occurring in the pattern or (o k o) peaks (see Figure 3). This is strong evidence that a preferred orientation of (0 0 l) or (o k o) directions parallel to the growth direction exists in the membrane. Another way of saying this is that the MFI crystal layer in GEL-LAI-ISC membranes shows very strong crystallographic orientation with the c-axis normal to the GEL layer.

Figure 5 shows a plan view of a typical (C-axis orientation) GEL-LAI-ISC membrane (sample #2). The close-packed top surface and cross-sectional columnar habit of the crystals was observed for the zeolite layer. Figure 4a shows the zeolite layer (C), the growth enhancing layer (B) and porous support (A). The major part of Figure 4a shows the continuous growth of zeolite that completely covers the surface of the GEL layer. The formation of a dense packing of columnar crystals in the zeolite layer is apparent. The width of the columns right on the growth enhancing layer is very narrow and becomes larger and larger as the layer grows. As such, the cross-sectional area of the grains increases upwards in the layer. The columnar nature of the microstructure is consistent with the x-ray powder diffraction pattern. In Figure 5, it is clear that zeolite surface consists of a continuous array of densely packed zeolite crystals, which are <10 µm in width.

### Effect of the Density of Nucleation Sites Upon the Width of MFI Crystals

The width of the zeolite crystal columns in sample #5 were smaller than those in sample #6 which has a lower density of nucleation sites in its GEL due to the addition of colloidal alumina. The morphology was similar, but the grain size is much larger in sample #6 than in #5. Thus, by simply controlling nucleation density the width of the zeolite crystals in the zeolite layer can be modified and controlled.

### Effect of Substrates Used Upon the Morphology of the MFI Crystals

Sample #9 grown on a stainless steel as substrate is very similar in morphology to the membrane fabricated on an alumina substrate. The MFI crystal formation seems independent of the substrate used.

### Dye Permeation Test

The absence of defects in the MFI zeolite layer was measured by its inability to pass dye molecules into the porous substrate. Any dye which wicks into the substrate is readily visible because of a color change in the substrate. Rhodamine B (0.5 wt%) in methanol defects is added to the center of a dried membrane to coat the surface. Approximately 2-3 drops were applied to a 1 inch (2.54 cm) membrane and allowed to set for ~30 seconds before the excess dye was blotted off. Methanol was then blotted on the membrane to remove any excess Rhodamine B solution on the membrane. The membrane was then washed with methanol for 10-30 seconds. Any permeation of the dye into the substrate through defects in the membrane is then readily apparent.

Methanol permeated into the substrate, however, no Rhodamine B dye was observed in the substrate indicating that the membrane is capable of performing dye separations.

When the membrane is synthesized from a zeolite synthesis mixture containing an organic template, the dye test is performed after calcination.

If a non-ceramic substrate is utilized. methods other than visual examination are used to detect wicking into the membrane.

## Claims

1. A zeolite membrane which exhibits a columnar cross-sectional morphology and preferred crystallographic orientation comprising a substrate having coated thereon a calcined mesoporous growth enhancing layer and a layer of columnar zeolite crystals on said mesoporous growth enhancing layer, and wherein said mesoporous growth enhancing layer comprises zeolites, zeolite and polymeric metal oxide, zeolites and colloidal sized metals; or zeolite, colloidal sized metal and polymeric metal oxide; and wherein said zeolites are selected from the group consisting of nanocrystalline zeolites and colloidal sized zeolites, and wherein said substrate is selected from the group consisting of porous and non-porous substrates and wherein said mesoporous growth enhancing layer has interstices of about 2 to about 200 nm, and wherein said columnar zeolite layer is a polycrystalline layer wherein 99% of said columnar zeolite crystals have at least one point between adjacent crystals that is ≤ 2 nm.

2. A composition comprising a substrate having coated thereon a calcined mesoporous growth enhancing layer and a layer of zeolite crystals in the form of a polycrystalline dense matt on said mesoporous growth enhancing layer, and wherein said mesoporous growth enhancing layer comprises zeolites; zeolite and colloidal or polymeric metal oxide; zeolite and colloidal sized metals; zeolite, colloidal sized metal and colloidal or polymeric metal oxide; and mixtures thereof, and wherein said zeolites of said mesoporous growth enhancing layer are selected from the group consisting of nanocrystalline zeolites and colloidal sized zeolites, and wherein said mesoporous growth enhancing layer has interstices of about 2 to about 200 nm, said zeolite layer is a polycrystalline layer which exhibits a shape preferred orientation and is substantially free of defects extending through the thickness of the layer and in which 99% of said zeolite crystals have at least one point between adjacent crystals that is ≤ 2 nm.

3. A zeolite membrane or composition as claimed in claim 1 or claim 2 wherein the layer if zeolite crystals is intergrown.

4. A zeolite membrane or composition according to claim 1 or claim 2 wherein said substrate is a porous substrate selected from the group consisting of stainless steel, pyrex, ceramic, alumina, titania, cordierite, mullite, silicon carbide, silicon nitride, carbon, graphite, zeolite, and mixtures thereof.

5. A zeolite membrane or composition according to claim 4 wherein said substrate is a porous substrate, having a porosity of about 10 to about 70% and a pore size distribution of about 0.004 to about 100 µm.

6. A zeolite membrane or composition according to claim 1 or claim 2 wherein said growth enhancing layer is about 0.1 to about 20 µm thick.

7. A zeolite membrane or composition according to claim 1 or claim 2 wherein said zeolite crystals of said zeolite layer and said zeolite of said growth enhancing layer are selected from the group consisting of silica, silicates, aluminosilicates, aluminophosphates, silicoalumino phosphates, metallo alumino phosphates, metallo alumino phospho-silicates and stanosilicates.

8. A zeolite membrane or composition according to claim 7 wherein said zeolite crystals of said zeolite layer and said zeolites of said growth enhancing layer are selected from those of structure type, zeolite X, zeolite Y, zeolite beta, MFI zeolite, silicalite, LTA, LTL, CHA, AFI, AEL, BEA, EUO, FER, KFI, MAZ, MOR, MEL, MTW, OFF, TON, FAU, AFS, AFY, APC, APD, MTN, MTT, AEL and mixtures thereof.

9. A zeolite membrane or composition according to claim 1 or claim 2 wherein said colloidal metal oxide of said growth enhancing layer is selected from the group consisting of colloidal sized alumina, silica, titania, zirconia, and mixtures thereof.

10. A zeolite membrane or composition according to claim 1 or claim 2 wherein said colloidal sized metal is selected from the group consisting of copper, platinum, silver and mixtures thereof.

11. A zeolite membrane or composition according to claim 1 or claim 2 wherein said composition has < 1 volume % voids.

12. A zeolite membrane or composition according to claim 11 wherein said composition has less than 0.1 volume % voids.

13. A zeolite membrane or composition according to claim 1 or claim 2 wherein said composition has < 10,000 defects per square inch of > 4 nm.

14. A zeolite membrane or composition according to claim 1 or claim 2 wherein said zeolite crystals of said zeolite layer are about 0.1 to about 20 µm in width and about 1 to 100 µ thick.

15. A zeolite membrane or composition according to claim 1 of claim 2 wherein said nanocrystalline zeolites in said growth enhancing layer are from about 1 nm to about 1 µm in size and said colloidal sized zeolites in said growth enhancing layer are from about 5 nm to about 1 µm.

16. A zeolite membrane according to claim 1 wherein said zeolite crystals of said zeolite layer exhibit in cross-section an assembly of crystals of similar habit.

17. A zeolite membrane or composition according to claim 1 or claim 2 wherein said metal oxide and said colloidal sized metal are present in an amount of from 99.99 wt% to about 0.01 wt%.

18. A zeolite membrane or composition according to claim 1 or claim 2 wherein when said zeolite crystals are of the MFI structure type they exhibit a C-axis orientation within 15 degrees of the normal to the surface of the zeolite layer or a b-axis orientation or a mixture thereof and wherein in said C-axis orientation the zeolite crystals are columnar zeolite crystals.

19. A zeolite membrane or composition according to claim 5 wherein said porous substrate has an average roughness with an amplitude of <10 µm with an aspect ratio of a roughness < 1:1.

20. A zeolite membrane or composition according to claim 1 or claim 2 wherein said substrate is a non-porous substrate selected from the group consisting of quartz, silicon, glass, borosilicate glasses, clay, metal, polymer, graphite, dense ceramic and mixtures thereof.

21. A composition according to claim 2 wherein said zeolite crystals are columnar zeolite crystals.

22. A zeolite membrane according to claim 1 wherein said composition has incorporated therein about 0.1 wt% to about 10 wt% Group VIII noble metal.

23. A zeolite membrane or composition according to claim 1 or claim 2 wherein said zeolite layer exhibits a crystallographic preferred orientation.

24. A process for preparing a zeolite membrane or composition as claimed in any one of claims 1 to 23, comprising the steps of:
(i) coating a substrate with a growth enhancing layer wherein said growth enhancing layer is prepared by
(a) utilizing a solution comprising zeolite; zeolite and metal oxide; zeolite and colloidal metal; zeolite, colloidal metal and metal oxide; or mixtures thereof; and wherein said zeolite is selected from the group consisting of nanocrystalline zeolite and colloidal zeolite, and wherein said metal oxide is colloidal metal or metal oxide prepared from sol-gel processing, followed by
(b) calcination to form a mechanically stable layer;
(ii) contacting said substrate having said growth enhancing layer coated thereon with a zeolite synthesis mixture;
(iii) hydrothermally treating said substrate and zeolite synthesis mixture for a time and at a temperature sufficient to form a zeolite layer on said growth enhancing layer and wherein settling of particles from said zeolite synthesis mixture during hydrothermal treatment onto said zeolite layer is prevented;
(iv) removing any unreacted zeolite synthesis mixture.

25. A process according to claim 24 wherein said coating step (a) is preferably performed by dipping said substrate when said substrate is a tubular or honeycomb substrate and spin coating said substrate when said substrate is a disk or plate substrate.

26. A process according to claim 24 wherein said solution for preparing said growth enhancing layer is a solution having a concentration of 0.1 to 10 wt% solids.

27. A process according to claim 24 further comprising calcining said composition at a temperature of about 400 to about 600°C for at least about one hour when said zeolite synthesis mixture contains an organic template.

28. A process according to claim 24 wherein during said contacting step (b) said substrate is oriented such that said growth enhancing layer is oriented from 90 to 270° in said synthesis mixture and wherein in said 180° orientation said growth enhancing layer is horizontal and facing downward, and wherein said growth enhancing layer is at least about 5mm from the bottom of said alkaline synthesis mixture.

29. A process according to claim 24 wherein step (d) comprises washing with a solution comprising water.

30. A process according to claim 24 wherein the width of the crystals in said zeolite layer is increased by increasing the amount of colloidal metal or metal oxide in step (b).

31. A separation process comprising contacting a feedstock derived from petroleum, air, hydrocarbons, or natural gas, comprising at least two molecular species with a zeolite membrane or composition according to any one of claims 1 to 23.

32. A process according to claim 31 wherein said molecular species is separated via molecular diffusion.

33. A process according to claim 31 wherein said feedstock is selected from the group consisting of mixed xylenes and ethylbenzene; hydrogen, H₂S and ammonia; mixtures of normal and isobutanes; mixtures of normal and isobutenes; kerosene containing normal paraffins; mixtures of nitrogen and oxygen; mixtures of hydrogen and methane; mixtures of hydrogen, ethane and ethylene; mixtures of hydrogen, propane and propylene; coker naphtha containing C₅ to C₁₀ normal olefins and paraffins; methane and ethane mixtures containing argon, helium, neon or nitrogen; intermediate reactor catalytic reformer products; fluid catalytic cracking products; naphtha; light coker gas oil; mixtures of normal and isopentanes; mixtures of normal and isopentenes; mixtures of ammonia, hydrogen and nitrogen; mixtures of 10 carbon aromatic; mixtures of butenes, mixtures of sulfur and nitrogen compounds, mixtures of sulfur compounds, mixtures of nitrogen compounds, mixtures containing benzene and mixtures thereof.

34. A process for catalyzing a chemical reaction comprising contacting a reaction stream with a zeolite membrane or composition according to any one of claims 1 to 23.

35. A process according to claim 34 wherein a catalyst forms a module with said zeolite membrane or composition or is contained within said zeolite membrane or composition.

36. A process according to claim 34 wherein said feedstock is comprised of mixed xylenes and ethylbenzene; ethane; ethylbenzene; butanes; propane; C₁₀-C₁₈ normal paraffins; H₂S; catalytic reforming streams; light petroleum gases; sulfur and nitrogen compounds; sulfur compounds; nitrogen compounds; mixed butenes; and mixtures thereof.

37. A process according to claim 35 wherein when said feedstock is reacted with said zeolite membrane or composition, a reactant or reaction product is obtained.

38. A process according to claim 31 wherein said feedstock is comprised of mixed xylenes and ethylbenzene; ethane; ethylbenzene; butanes; propane; C₁₀-C₁₈ normal paraffins; H₂S; catalytic reforming streams; light petroleum gases (LPG); sulfur and nitrogen compounds; sulfur compounds; nitrogen compounds; mixed butenes; and mixtures thereof.

39. A process for catalysing a chemical reaction which comprises contacting one reactant of a bimolecular reaction mixture with one face of a zeolite membrane or composition according to claim 4 and wherein said zeolite layer of the composition or membrane is in active catalytic form, under catalytic conversion conditions, and controlling the addition of a second reactant by diffusion from the opposite face of the structure.

40. A process according to claim 31 wherein said zeolite membrane or composition adsorbs at least one molecular species of said feedstock.

## Patentansprüche

1. Zeolithmembran, die eine Morphologie mit säulenförmigem Querschnitt und eine bevorzugte kristallographische Orientierung aufweist, die ein Substrat enthält, auf dem eine calcinierte mesoporöse wachstumsfördernde Schicht und eine Schicht säulenförmiger Zeolithkristalle auf der mesoporösen wachstumsfördernden Schicht aufgeschichtet sind, und wobei die mesoporöse wachstumsfördernde Schicht Zeolithe, Zeolith und polymeres Metalloxid, Zeolithe und Metalle von kolloidaler Größe; oder Zeolith, Metall von kolloidaler Größe und polymeres Metalloxid enthält, und wobei die Zeolithe ausgewählt sind aus der Gruppe bestehend aus nanokristallinen Zeolithen und Zeolithen von kolloidaler Größe, und wobei das Substrat ausgewählt ist aus der Gruppe bestehend aus porösen und nicht-porösen Substraten, und wobei die mesoporöse wachstumsfördernde Schicht Lücken von etwa 2 bis etwa 200 nm aufweist, und wobei die säulenförmige Zeolithschicht eine polykristalline Schicht ist, wobei 99 % der säulenförmigen Zeolithkristalle mindestens einen Punkt zwischen angrenzenden Kristallen aufweisen, der ≤ 2 nm ist.

2. Zusammensetzung, die Substrat enthält, auf das eine calcinierte mesoporöse wachstumsfördernde Schicht und eine Schicht aus Zeolithkristallen in Form einer polykristallinen dichten Matte auf der mesoporösen wachstumsfördernden Schicht aufgeschichtet sind, und wobei die mesoporöse wachstumsfördernde Schicht Zeolithe; Zeolith und kolloidales oder polymeres Metalloxid; Zeolith und Metalle von kolloidaler Größe; Zeolith, Metall von kolloidaler Größe und kolloidales oder polymeres Metalloxid; und Mischungen davon enthält, und wobei die Zeolithe der mesoporösen wachstumsfördernden Schicht ausgewählt sind aus der Gruppe bestehend aus nanokristallinen Zeolithen und Zeolithen von kolloidaler Größe, und wobei die mesoporöse wachstumsfördernde Schicht Lücken von etwa 2 bis etwa 200 nm aufweist, wobei die Zeolithschicht eine polykristalline Schicht ist, die eine formbevorzugte Orientierung zeigt und im Wesentlichen frei von Defekten ist, die sich durch die Dicke der Schicht hindurch erstrecken, und wobei 99 % der Zeolithkristalle mindestens einen Punkt zwischen angrenzenden Kristallen aufweisen, der ≤ 2 nm ist.

3. Zeolithmembran oder Zusammensetzung nach Anspruch 1 oder Anspruch 2, wobei die Schicht, falls sie Zeolithkristalle ist, verwachsen ist.

4. Zeolithmembran oder Zusammensetzung nach Anspruch 1 oder Anspruch 2, bei der das Substrat ein poröses Substrat ausgewählt aus der Gruppe bestehend aus rostfreiem Stahl, Pyrex, Keramik, Aluminiumoxid, Titandioxid, Cordierit, Mullit, Siliciumcarbid, Siliciumnitrid, Kohlenstoff, Graphit, Zeolith und Mischungen davon ist.

5. Zeolithmembran oder Zusammensetzung nach Anspruch 4, bei der das Substrat poröses Substrat ist, welches eine Porosität von etwa 10 bis etwa 70 % und eine Porengrößenverteilung von etwa 0,004 bis etwa 100 µm hat.

6. Zeolithmembran oder Zusammensetzung nach Anspruch 1 oder Anspruch 2, bei der die wachstumsfördernde Schicht etwa 0,1 bis etwa 20 µm dick ist.

7. Zeolithmembran oder Zusammensetzung nach Anspruch 1 oder Anspruch 2, bei der die Zeolithkristalle der Zeolithschicht und der Zeolith der wachstumsfördernden Schicht ausgewählt sind aus der Gruppe bestehend aus Siliciumdioxid, Silikaten, Aluminiumsilikaten, Aluminiumphosphaten, Siliciumaluminiumphosphaten, Metallaluminiumphosphaten, Metallaluminiumphosphosilikaten und Stannosilikaten.

8. Zeolithmembran oder Zusammensetzung nach Anspruch 7, bei der die Zeolithkristalle der Zeolithschicht und die Zeolithe der wachstumsfördernden Schicht ausgewählt sind aus jenen vom Strukturtyp Zeolith X, Zeolith Y, Zeolith β, MFI-Zeolith, Silikalit, LTA, LTL, CHA, AFI, AEL, BEA, EUO, FER, KFI, MAZ, MOR, MEL, MTW, OFF, TON, FAU, AFS, AFY, APC, APD, MTN, MTT, AEL und Mischungen davon.

9. Zeolithmembran oder Zusammensetzung nach Anspruch 1 oder Anspruch 2, bei der das kolloidale Metalloxid der wachstumsfördernden Schicht ausgewählt ist aus der Gruppe bestehend aus Aluminiumoxid, Siliciumdioxid, Titandioxid, Zirkoniumdioxid von kolloidaler Größe und Mischungen davon.

10. Zeolithmembran oder Zusammensetzung nach Anspruch 1 oder Anspruch 2, bei der das Metall von kolloidaler Größe ausgewählt ist aus der Gruppe bestehend aus Kupfer, Platin, Silber und Mischungen davon.

11. Zeolithmembran oder Zusammensetzung nach Anspruch 1 oder Anspruch 2, bei der die Zusammensetzung < 1 Vol.% Lücken hat.

12. Zeolithmembran oder Zusammensetzung nach Anspruch 11, bei der die Zusammensetzung < 0,1 Vol.% Lücken hat.

13. Zeolithmembran oder Zusammensetzung nach Anspruch 1 oder Anspruch 2, bei der die Zusammensetzung < 10 000 Defekte pro Quadratzoll von > 4 nm aufweist.

14. Zeolithmembran oder Zusammensetzung nach Anspruch 1 oder Anspruch 2, bei der die Zeolithkristalle der Zeolithschicht etwa 0,1 bis etwa 20 µm breit und etwa 1 bis 100 µm dick sind.

15. Zeolithmembran oder Zusammensetzung nach Anspruch 1 oder Anspruch 2, bei der die nanokristallinen Zeolithe in der wachstumsfördernden Schicht etwa 1 nm bis etwa 1 µm groß sind und die Zeolithe mit kolloidaler Größe in der wachstumsfördernden Schicht etwa 5 nm bis etwa 1 µm sind.

16. Zeolithmembran nach Anspruch 1, bei der die Zeolithkristalle der Zeolithschicht im Querschnitt eine Anordnung von Kristallen von ähnlichem Habitus zeigen.

17. Zeolithmembran oder Zusammensetzung nach Anspruch 1 oder Anspruch 2, bei der das Metalloxid und das Metall von kolloidaler Größe in einer Menge von 99,99 Gew.% bis etwa 0,01 Gew.% vorhanden sind.

18. Zeolithmembran oder Zusammensetzung nach Anspruch 1 oder Anspruch 2, bei der die Zeolithkristalle, wenn sie vom MFI-Strukturtyp sind, eine C-Achsenorientierung innerhalb von 15 Grad der Normalen zu der Oberfläche der Zeolithschicht oder eine b-Achsenorientierung oder eine Mischung davon zeigen, und wobei in der C-Achsenorientierung die Zeolithkristalle säulenförmige Zeolithkristalle sind.

19. Zeolithmembran oder Zusammensetzung nach Anspruch 5, bei der das poröse Substrat eine durchschnittliche Rauheit mit einer Amplitude < 10 µm mit einem Aspektverhältnis einer Rauheit < 1:1 aufweist.

20. Zeolithmembran oder Zusammensetzung nach Anspruch 1 oder Anspruch 2, bei der das Substrat ein nicht-poröses Substrat ausgewählt aus der Gruppe bestehend aus Quarz, Silicium, Glas, Borsilikatgläsern, Ton, Metall, Polymer, Graphit, dichter Keramik und Mischungen davon ist.

21. Zusammensetzung nach Anspruch 2, bei der die Zeolithkristalle säulenförmige Zeolithkristalle sind.

22. Zeolithmembran nach Anspruch 1, bei der in die Zusammensetzung etwa 0,1 Gew.% bis etwa 10 Gew.% Edelmetall der Gruppe VIII eingebaut sind.

23. Zeolithmembran oder Zusammensetzung nach Anspruch 1 oder Anspruch 2, bei der die Zeolithschicht eine kristallographische bevorzugte Orientierung zeigt.

24. Verfahren zur Herstellung einer Zeolithmembran oder Zusammensetzung gemäß einem der Ansprüche 1 bis 23, bei dem in Stufen
(i) ein Substrat mit einer wachstumsfördernden Schicht beschichtet wird, wobei die wachstumsfördernde Schicht hergestellt ist durch
(a) Einsetzen einer Lösung, die Zeolith; Zeolith und Metalloxid; Zeolith und kolloidales Metall; Zeolith, kolloidales Metall und Metalloxid; oder Mischungen davon enthält, und wobei der Zeolith ausgewählt ist aus der Gruppe bestehend aus nanokristallinem Zeolith und kolloidalem Zeolith, und wobei das Metalloxid kolloidales Metall oder Metalloxid hergestellt durch Sol-Gel-Verarbeitung ist, gefolgt von
(b) Calcinierung zur Bildung einer mechanisch stabilen Schicht;
(ii) das Substrat mit der darauf aufgeschichteten wachstumsfördernden Schicht mit einer Zeolithsynthesemischung in Kontakt gebracht wird;
(iii) das Substrat und die Zeolithsynthesemischung für eine Zeit und bei einer Temperatur hydrothermalbehandelt werden, die ausreichen, um eine Zeolithschicht auf der wachstumsfördernden Schicht zu bilden, und wobei das Absetzen von Teilchen aus der Zeolithsynthesemischung während der Hydrothermalbehandlung auf der Zeolithschicht verhindert wird;
(iv) jegliche nicht-umgesetzte Zeolithsynthesemischung entfernt wird.

25. Verfahren nach Anspruch 24, bei der die Beschichtungsstufe (a) vorzugsweise durch Tauchen des Substrats, wenn das Substrat rohrförmiges oder wabenförmiges Substrat ist, und Schleuderbeschichten des Substrats durchgeführt wird, wenn das Substrat ein Scheiben- oder Plattensubstrat ist.

26. Verfahren nach Anspruch 24, bei der die Lösung zur Herstellung der wachstumsfördernden Schicht eine Lösung mit einer Konzentration von 0,1 bis 10 Gew.% Feststoffen ist.

27. Verfahren nach Anspruch 24, bei dem die Zusammensetzung ferner bei einer Temperatur von etwa 400 bis etwa 600°C mindestens etwa eine Stunde calciniert wird, wenn die Zeolithsynthesemischung ein organisches Struktursteuerungsmittel enthält.

28. Verfahren nach Anspruch 24, bei dem während der Kontaktierungsstufe (b) das Substrat orientiert wird, so dass die wachstumsfördernde Schicht von 90 bis 270° in der Synthesemischung orientiert ist und wobei bei der 180° Orientierung die wachstumsfördernde Schicht horizontal ist und nach unten weist, und wobei die wachstumsfördernde Schicht mindestens etwa 5 mm von dem Boden der alkalischen Synthesemischung entfernt ist.

29. Verfahren nach Anspruch 24, bei der Stufe (d) das Waschen mit einer Lösung beinhaltet, die Wasser enthält.

30. Verfahren nach Anspruch 24, bei der die Breite der Kristalle in der Zeolithschicht erhöht wird, indem die Menge an kolloidalem Metall oder Metalloxid in Stufe (b) erhöht wird.

31. Trennverfahren, bei dem ein von Erdöl, Luft, Kohlenwasserstoffen oder Erdgas abgeleitetes Einsatzmaterial, das mindestens zwei Molekülspezies enthält, mit einer Zeolithmembran oder Zusammensetzung nach einem der Ansprüche 1 bis 23 in Kontakt gebracht wird.

32. Verfahren nach Anspruch 31, bei dem die Molekülspezies durch molekulare Diffusion getrennt werden.

33. Verfahren nach Anspruch 31, bei dem das Einsatzmaterial ausgewählt ist aus der Gruppe bestehend aus gemischten Xylolen und Ethylbenzol; Wasserstoff, H₂S und Ammoniak; Mischungen von n- und Isobutanen; Mischungen von n- und Isobutenen; Kerosin, das n-Paraffine enthält; Mischungen von Stickstoff und Sauerstoff; Mischungen von Wasserstoff und Methan; Mischungen von Wasserstoff, Ethan und Ethylen; Mischungen von Wasserstoff, Propan und Propylen; Kokernaphtha, das C₅- bis C₁₀-n-Olefine und -Paraffine enthält; Methan- und Ethanmischungen, die Argon, Helium, Neon oder Stickstoff enthalten; Zwischenprodukte aus dem katalytischen Reformerreaktor; katalytische Wirbelschicht-Crackprodukte; Naphtha; leichtem Kokergasöl; Mischungen von n- und Isopentanen; Mischungen von n- und Isopentenen; Mischungen von Ammoniak, Wasserstoff und Stickstoff; Mischungen von Aromaten mit 10 Kohlenstoffatomen; Mischungen von Butenen; Mischungen von Schwefelund Stickstoffverbindungen; Mischungen von Schwefelverbindungen; Mischungen von Stickstoffverbindungen; benzolhaltigen Mischungen sowie Mischungen davon.

34. Verfahren zum Katalysieren einer chemischen Reaktion, bei dem ein Reaktionsstrom mit einer Zeolithmembran oder Zusammensetzung gemäß einem der Ansprüche 1 bis 23 in Kontakt gebracht wird.

35. Verfahren nach Anspruch 34, bei dem ein Katalysator ein Modul mit der Zeolithmembran oder Zusammensetzung bildet oder innerhalb der Zeolithmembran oder Zusammensetzung vorhanden ist.

36. Verfahren nach Anspruch 34, bei dem das Einsatzmaterial aus gemischten Xylolen und Ethylbenzol; Ethan; Ethylbenzol; Butanen; Propan; C₁₀- bis C₁₈-n-Paraffinen; H₂S; katalytischen Reformierströmen; leichten Erdölgasen; Schwefel- und Stickstoffverbindungen; Schwefelverbindungen; Stickstoffverbindungen; gemischten Butenen sowie Mischungen davon zusammengesetzt ist.

37. Verfahren nach Anspruch 35, bei dem, wenn das Einsatzmaterial mit der Zeolithmembran oder Zusammensetzung umgesetzt wird, ein Reaktand oder Reaktionsprodukt erhalten wird.

38. Verfahren nach Anspruch 31, bei dem das Einsatzmaterial aus gemischten Xylolen und Ethylbenzol; Ethan; Ethylbenzol; Butanen; Propan; C₁₀- bis C₁₈-n-Paraffinen; H₂S; katalytischen Reformierströmen; leichten Erdölgasen (LPG); Schwefel- und Stickstoffverbindungen; Schwefelverbindungen; Stickstoffverbindungen; gemischten Butenen sowie Mischungen davon zusammengesetzt ist.

39. Verfahren zum Katalysieren einer chemischen Reaktion, bei dem ein Reaktand einer bimolekularen Reaktionsmischung mit einer Seite einer Zeolithmembran oder Zusammensetzung nach Anspruch 4, und bei dem die Zeolithschicht der Zusammensetzung oder Membran in aktiver katalytischer Form vorliegt, unter katalytischen Umwandlungsbedingungen in Kontakt gebracht wird, und die Zugabe eines zweiten Reaktanden durch Diffusion von der entgegengesetzten Seite der Struktur gesteuert wird.

40. Verfahren nach Anspruch 31, bei dem die Zeolithmembran oder Zusammensetzung mindestens eine Molekülspezies des Einsatzmaterials adsorbiert.

## Revendications

1. Membrane zéolitique qui présente une morphologie de colonne en section transversale et une orientation cristallographique préférée comprenant un substrat portant sous forme de revêtement une couche d'amplification de croissance mésoporeuse calcinée et une couche de cristaux de zéolite en forme de colonne sur ladite couche d'amplification de croissance mésoporeuse, et dans laquelle ladite couche d'amplification de croissance mésoporeuse comprend des zéolites, une zéolite et un oxyde métallique polymère, des zéolites et des métaux de dimensions colloïdales ; ou une zéolite, un métal de dimensions colloïdales et un oxyde métallique polymère; et dans laquelle lesdites zéolites sont choisies dans le groupe consistant en des zéolites monocristallines et des zéolites de dimensions colloïdales, et dans laquelle ledit substrat est choisi dans le groupe consistant en des substrats poreux et substrats non poreux et dans laquelle ladite couche d'amplification de croissance mésoporeuse a des interstices d'environ 2 à environ 200 nm, et dans laquelle ladite couche de zéolite en forme de colonne est une couche polycristalline dans laquelle 99% desdits cristaux de zéolite en forme de colonne possèdent au moins un point entre les cristaux adjacents qui est ≤ 2 nm.

2. Composition comprenant un substrat portant sous forme de revêtement une couche d'amplification de croissance mésoporeuse calcinée, une couche de cristaux de zéolite sous forme d'une nappe dense polycristalline sur ladite couche d'amplification de croissance mésoporeuse, et dans laquelle ladite couche d'amplification de croissance mésoporeuse comprend des zéolites ; une zéolite et un oxyde métallique colloïdal ou polymère ; une zéolite et des métaux de dimensions colloïdales ; une zéolite, un métal de dimensions colloïdales et un oxyde métallique colloïdal ou polymère ; et leurs mélanges ; et dans laquelle lesdites zéolites de ladite couche d'amplification de croissance mésoporeuse sont choisies dans le groupe consistant en des zéolites nanocristallines et des zéolites de dimensions colloïdales, et dans laquelle ladite couche d'amplification de croissance mésoporeuse possède des interstices d'environ 2 à environ 200 nm, ladite couche de zéolite est une couche polycristalline qui présente une orientation préférée de forme et qui est pratiquement dépourvue de défauts s'étendant à travers l'épaisseur de la couche, et dans laquelle 99 % desdits cristaux de zéolite possèdent au moins un point entre les cristaux adjacents qui est ≤ 2 nm.

3. Membrane zéolitique ou composition suivant la revendication 1 ou la revendication 2, dans laquelle la couche de cristaux de zéolite est constituée de cristaux enchevêtrés.

4. Membrane zéolitique ou composition suivant la revendication 1 ou la revendication 2, dans laquelle ledit substrat est un substrat poreux choisi dans le groupe consistant en l'acier inoxydable, le Pyrex, une matière céramique, l'alumine, l'oxyde de titane, la cordiérite, la mullite, le carbure de silicium, le nitrure de silicium, le carbone, le graphite, une zéolite et leurs mélanges.

5. Membrane zéolitique ou composition suivant la revendication 4, dans laquelle ledit substrat est un substrat poreux, et a une porosité d'environ 10 à environ 70 % et une distribution des diamètres des pores d'environ 0,004 à environ à 100 µm.

6. Membrane zéolitique ou composition suivant la revendication 1 ou la revendication 2, dans laquelle ladite couche d'amplification de croissance a une épaisseur d'environ 0,1 à environ 20 µm.

7. Membrane zéolitique ou composition suivant la revendication 1 ou la revendication 2, dans laquelle lesdits cristaux de zéolite de ladite couche de zéolite et ladite zéolite de ladite couche d'amplification de croissance sont choisis dans le groupe consistant en la silice, des silicates, des aluminosilicates, des aluminophosphates, des silicoaluminophosphates, des métalloaluminophosphates, des métalloaluminophosphosilicates et des stannosilicates.

8. Membrane zéolitique ou composition suivant la revendication 7, dans laquelle lesdits cristaux de zéolite de ladite couche de zéolite et lesdites zéolites de ladite couche d'amplification de croissance sont choisis parmi les zéolites ayant les types de structures zéolite X, zéolite Y, zéolite bêta, zéolite MFI, silicalite, LTA, LTL, CHA, AFI, AEL, BEA, EUO, FER, KFI, MAZ, MOR, MEL, MTW, OFF, TON, FAU, AFS, AFY, APC, APD, MTN, MTT, AEL et leurs mélanges.

9. Membrane zéolitique ou composition suivant la revendication 1 ou la revendication 2, dans laquelle ledit oxyde métallique colloïdal de ladite couche d'amplification de croissance est choisie dans le groupe consistant en alumine, silice, oxyde de titane et zircone de dimensions colloïdales, et leurs mélanges.

10. Membrane zéolitique ou composition suivant la revendication 1 ou la revendication 2, dans laquelle ledit métal de dimensions colloïdales est choisi dans le groupe consistant en cuivre, platine, argent et leurs mélanges.

11. Membrane zéolitique ou composition suivant la revendication 1 ou la revendication 2, dans laquelle ladite composition comprend moins de 1 % en volume de vides.

12. Membrane zéolitique ou composition suivant la revendication 11, dans laquelle ladite composition comprend moins de 0,1 % en volume de vides.

13. Membrane zéolitique ou composition suivant la revendication 1 ou la revendication 2, dans laquelle ladite composition comprend moins de 10 000 défauts par inch carré de plus de 4 nm.

14. Membrane zéolitique ou composition suivant la revendication 1 ou la revendication 2, dans laquelle lesdits cristaux de zéolite de ladite couche de zéolite ont une largeur d'environ 0,1 à environ 20 µm et une épaisseur d'environ 1 à 100 µm.

15. Membrane zéolitique ou composition suivant la revendication 1 ou la revendication 2, dans laquelle lesdites zéolites nanocristallines dans ladite couche d'amplification de croissance ont des dimensions d'environ 1 nm à environ 1 µm et lesdites zéolites de dimensions colloïdales dans ladite couche d'amplification de croissance ont des dimensions d'environ 5 nm à environ 1 µm.

16. Membrane zéolitique suivant la revendication 1, dans laquelle lesdits cristaux de zéolite de ladite couche de zéolite présentent en section transversale un assemblage de cristaux d'habitus similaires.

17. Membrane zéolitique ou composition suivant la revendication 1 ou la revendication 2, dans laquelle ledit oxyde métallique et ledit métal de dimensions colloïdales sont présents en une quantité de 99,99 % en poids à environ 0,01 % en poids.

18. Membrane zéolitique ou composition suivant la revendication 1 ou la revendication 2, dans laquelle, lorsque lesdits cristaux de zéolite ont le type de structure MFI, ils présentent une orientation dans l'axe C dans les limites de 15 degrés de la perpendiculaire par rapport à la surface de la couche de zéolite ou une orientation dans l'axe b ou un de leurs mélanges, et dans laquelle, dans ladite orientation dans l'axe C, les cristaux de zéolite sont des cristaux de zéolite en forme de colonne.

19. Membrane zéolitique ou composition suivant la revendication 5, dans laquelle ledit substrat poreux a une rugosité moyenne avec une amplitude inférieure à 10 µm, avec un rapport d'allongement d'une rugosité inférieure à 1:1.

20. Membrane zéolitique ou composition suivant la revendication 1 ou la revendication 2, dans laquelle ledit substrat est un substrat non poreux choisi dans le groupe consistant en quartz, silicium, verre, verres au borosilicate, argile, métal, polymère, graphite, matière céramique dense et leurs mélanges.

21. Composition suivant la revendication 2, dans laquelle lesdits cristaux de zéolite sont des cristaux de zéolite en forme de colonne.

22. Membrane zéolitique suivant la revendication 1, dans laquelle ladite composition renferme environ 0,1 % en poids à environ 10 % en poids d'un métal noble du Groupe VIII.

23. Membrane zéolitique ou composition suivant la revendication 1 ou la revendication 2, dans laquelle ladite couche de zéolite présente une orientation préférée cristallographique.

24. Procédé pour la préparation d'une membrane zéolitique ou composition suivant l'une quelconque des revendications 1 à 23, comprenant les étapes consistant:
(i) à revêtir un substrat avec une couche d'amplification de croissance, ladite couche d'amplification de croissance étant préparée
(a) en utilisant une solution comprenant une zéolite ; une zéolite et un oxyde métallique ; une zéolite et un métal colloïdal ; une zéolite, un métal colloïdal et un oxyde métallique ; ou leurs mélanges ; ladite zéolite étant choisie dans le groupe consistant en une zéolite nanocristalline et une zéolite colloïdale, et ledit oxyde métallique étant un métal ou oxyde métallique colloïdal préparé par un traitement sol-gel, puis
(b) en effectuant une calcination pour former une couche mécaniquement stable ;
(ii) à mettre en contact ledit substrat portant, sous forme d'un revêtement, ladite couche d'amplification de croissance, avec un mélange de synthèse de zéolite ;
(iii) à soumettre à un traitement hydrothermique ledit substrat et ledit mélange de synthèse de zéolite pendant un temps et à une température suffisants pour former une couche de zéolite sur ladite couche d'amplification de croissance, la sédimentation des particules à partir dudit mélange de synthèse de zéolite au cours du traitement hydrothermique sur ladite couche de zéolite étant inhibée ;
(iv) à éliminer toute quantité de mélange de synthèse de zéolite n'ayant pas réagi.

25. Procédé suivant la revendication 24, dans lequel ladite étape de revêtement (a) est de préférence mise en oeuvre en plongeant ledit substrat, lorsque ledit substrat est un substrat tubulaire ou en nid d'abeille et en soumettant ledit substrat à un revêtement centrifuge lorsque ledit substrat est un substrat en forme de disque ou de plaque.

26. Procédé suivant la revendication 24, dans lequel ladite solution pour la préparation de ladite couche d'amplification de croissance est une solution ayant une concentration en matières solides de 0,1 à 10 % en poids.

27. Procédé suivant la revendication 24, comprenant en outre la calcination de ladite composition à une température comprise dans l'intervalle d'environ 400 à environ 600°C pendant un temps d'au moins environ une heure lorsque ledit mélange de synthèse de zéolite contient un agent organique servant de modèle.

28. Procédé suivant la revendication 24, dans lequel, au cours de ladite étape de mise en contact (b), ledit substrat est orienté de telle sorte que ladite couche d'amplification de croissance soit orientée de 90 à 270° dans ledit mélange de synthèse, et dans lequel, dans ladite orientation à 180°, ladite couche d'amplification de croissance est horizontale et est tournée vers le bas, et dans lequel ladite couche d'amplification de croissance est à une distance d'au moins environ 5 mm du fond dudit mélange de synthèse alcalin.

29. Procédé suivant la revendication 24, dans lequel l'étape (d) comprend un lavage avec une solution comprenant de l'eau.

30. Procédé suivant la revendication 24, dans lequel la largeur des cristaux dans ladite couche de zéolite est accrue en augmentant la quantité de métal colloïdal ou d'oxyde métallique colloïdal dans l'étape (b).

31. Procédé de séparation comprenant la mise en contact d'une charge d'alimentation dérivée du pétrole, de l'air, d'hydrocarbures ou de gaz naturel, comprenant au moins deux entités moléculaires, avec une membrane zéolitique ou composition suivant l'une quelconque des revendications 1 à 23.

32. Procédé suivant la revendication 31, dans lequel ladite entité moléculaire est séparée par diffusion moléculaire.

33. Procédé suivant la revendication 31, dans lequel ladite charge d'alimentation est choisie dans le groupe consistant en des xylènes mixtes et l'éthylbenzène ; l'hydrogène, H₂S et l'ammoniac ; des mélanges de n-butane et d'isobutane ; des mélanges de n-butène et d'isobutène ; du kérosène contenant des paraffines normales ; des mélanges d'azote et d'oxygène ; des mélanges d'hydrogène et de méthane ; des mélanges d'hydrogène, d'éthane et d'éthylène ; des mélanges d'hydrogène, de propane et de propylène ; du naphta d'unité de cokéfaction contenant des oléfines et paraffines normales en C₅ à C₁₀ ; des mélanges de méthane et d'éthane contenant de l'argon, de l'hélium, du néon ou de l'azote ; des produits de reformage catalytique de réacteur intermédiaire, des produits de crackage catalytique fluide, le naphta, le gasoil léger d'unité de cokéfaction ; des mélanges de n-pentane et d'isopentane ; des mélanges de n-pentène et d'isopentène ; des mélanges d'ammoniac, d'hydrogène et d'azote ; des mélanges d'hydrocarbures aromatiques ayant 10 atomes de carbone ; des mélanges de butène ; des mélanges de composés soufrés et de composés azotés ; des mélanges contenant du benzène, et leurs mélanges.

34. Procédé pour catalyser une réaction chimique, comprenant la mise en contact d'un courant réactionnel avec une membrane zéolitique ou composition suivant l'une quelconque des revendications 1 à 23.

35. Procédé suivant la revendication 34, dans lequel un catalyseur forme un module avec ladite membrane zéolitique ou composition ou est présent dans ladite membrane zéolitique ou composition.

36. Procédé suivant la revendication 34, dans lequel ladite charge d'alimentation est constituée de xylènes mixtes et d'éthylbenzène ; d'éthane ; d'éthylbenzène ; de butanes ; de propane ; de paraffines normales en C₁₀ à C₁₈; de H₂S ; de courants de reformage catalytique ; de gaz de pétrole légers ; de composés soufrés et composés azotés ; de composés soufrés ; de composés azotés ; de butènes mixtes ; et de leurs mélanges.

37. Procédé suivant la revendication 35, dans lequel, lorsque ladite charge d'alimentation est amenée à réagir avec ladite membrane zéolitique ou composition, un corps réactionnel ou produit de réaction est obtenu.

38. Procédé suivant la revendication 31, dans lequel ladite charge d'alimentation est constituée de xylènes mixtes et d'éthylbenzène ; d'éthane ; d'éthybenzène ; de butanes ; de propane ; de paraffines normales en C₁₀ à C₁₈; de H₂S ; de courants de reformage catalytique ; de gaz de pétrole légers (LPG) ; de composés soufrés et composés azotés ; de composés soufrés ; de composés azotés ; de butènes mixtes ; et de leurs mélanges.

39. Procédé pour catalyser une réaction chimique, qui comprend la mise en contact d'un corps réactionnel d'un mélange réactionnel bimoléculaire avec une face d'une membrane zéolitique ou composition suivant la revendication 4, et dans lequel ladite couche de zéolite de la composition ou membrane est sous une forme catalytique active, dans des conditions de conversion catalytique, et l'ajustement de l'addition d'un second corps réactionnel par diffusion depuis la face opposée de la structure.

40. Procédé suivant la revendication 31, dans lequel ladite membrane zéolitique ou composition adsorbe au moins une entité moléculaire de ladite charge d'alimentation.
